# EUROPEAN PATENT APPLICATION

(11) **EP 3 741 617 A1**
(43) Date of publication of application: **25.11.2020**
(21) Application number: 20175735.8
(22) Date of filing: 20.05.2020
(51) Int. Cl.: B60Q 1/14, F21S 41/153, F21S 41/255, F21S 41/265, F21S 41/663

(54) **VEHICULAR LAMP FITTING**

(30) Priority: 24.05.2019 JP 2019097351
(71) Applicant: STANLEY ELECTRIC CO., LTD., Tokyo 153-8636 (JP)
(72) Inventor: HOSHINO, Shinya, Tokyo, 153-8636 (JP)
(74) Representative: Klang, Alexander H.

(57) **Abstract**

A vehicular lamp fitting (10) that forms a light distribution pattern (P) including first (I1) and second (I2) light source images comprises first and second light sources (LS1, LS2) including respective semiconductor light emitting element groups; first and second projection optical systems (OP1, OP2) corresponding to the first and second light sources respectively; and control means (22), wherein the first and second light source images include first and second pixel groups corresponding to the semiconductor light emitting element group of the first and second light sources respectively, the light distribution pattern includes an overlap region (D) where parts of the first and second pixel groups overlap each other, and the control means performs the individual turning ON/OFF control of each of the semiconductor light emitting element groups such that a brightness difference between the light distribution pattern inside the overlap region and the light distribution pattern outside the overlap region is inconspicuous.

## Description

### FIELD

The present invention relates to a vehicular lamp fitting, and particularly to a vehicular lamp fitting which can prevent an uneven light distribution.

### BACKGROUND

In a field of vehicular lamp fittings, there has conventionally been known a vehicular lamp fitting which includes a plurality of light sources (LED chips) and a projection lens and performs enlarged projection of respective light source images of the plurality of light sources using the projection lens to form a predetermined light distribution pattern including the plurality of light source images arranged in a horizontal direction in partially overlapping relation (see, e.g., Japanese Patent Application Publication No. 2015-016773).

### SUMMARY

However, in the vehicular lamp fitting described in Japanese Patent Application Publication No. 2015-016773, a luminous intensity of the predetermined light distribution pattern is higher inside an overlap region than outside the overlap region. This results in an uneven light distribution and causes a problem in that the uneven light distribution gives a feeling of discomfort to a driver or the like.

The present invention is achieved in view of such circumstances, and an object of the present invention is to provide a vehicular lamp fitting which can prevent an uneven light distribution.

To attain the object described above, an aspect of the present invention is a vehicular lamp fitting that forms a predetermined light distribution pattern including a plurality of light source images, the vehicular lamp fitting including: a plurality of light sources including respective semiconductor light emitting element groups each arranged in a matrix configuration; a plurality of projection optical systems corresponding to the plurality of light sources; and control means that performs individual turning ON/OFF control of each of the semiconductor light emitting element groups, wherein the plurality of projection optical systems include a first projection optical system corresponding to a first light source and a second projection optical system corresponding to a second light source, the plurality of light source images include a first light source image including a first pixel group corresponding to the semiconductor light emitting element group of the first light source and a second light source image including a second pixel group corresponding to the semiconductor light emitting element group of the second light source, the predetermined light distribution pattern includes an overlap region where at least a part of the first pixel group and at least a part of the second pixel group overlap each other, and the control means performs the individual turning ON/OFF control of each of the semiconductor light emitting element groups such that a brightness difference between the predetermined light distribution pattern inside the overlap region and the predetermined light distribution pattern outside the overlap region is inconspicuous.

According to the aspect, it is possible to provide the vehicular lamp fitting which can prevent an uneven light distribution.

This is because the vehicular lamp fitting includes the control means that performs the individual turning ON/OFF control of each of the semiconductor light emitting element groups, and the control means performs the individual turning ON/OFF control of each of the semiconductor light emitting element groups such that the brightness difference between the predetermined light distribution pattern inside the overlap region and the predetermined light distribution pattern outside the overlap region is inconspicuous.

In a preferred mode of the invention described above, the control means performs the individual turning ON/OFF control of each of the semiconductor light emitting element groups so as to reduce at least one of a luminous intensity of the first pixel group inside the overlap region and a luminous intensity of the second pixel group inside the overlap region.

In a preferred mode of the invention described above, the control means performs the individual turning ON/OFF control of each of the semiconductor light emitting element groups so as to gradationally reduce at least one of a luminous intensity of the first pixel group inside the overlap region and a luminous intensity of the second pixel group inside the overlap region.

In a preferred mode of the invention described above, the control means performs individual control of each of the semiconductor light emitting element groups so as to turn ON the first pixel group inside the overlap region and turn OFF the second pixel group inside the overlap region.

In a preferred mode of the invention described above, the vehicular lamp fitting further includes: failure detection means that detects a failed semiconductor light emitting element included in any of the semiconductor light emitting element groups, wherein the semiconductor light emitting element group of the first light source includes a first semiconductor light emitting element corresponding to a first pixel included in the first pixel group, the semiconductor light emitting element group of the second light source includes a second semiconductor light emitting element corresponding to a second pixel included in the second pixel group and overlapping the first pixel, and, when a failure of the first semiconductor light emitting element is detected by the failure detection means, the control means performs the turning ON/OFF control of the second semiconductor light emitting element so as to increase a luminous intensity of the second pixel.

According to the aspect, when one of the light sources (first semiconductor light emitting element corresponding to the first pixel) in the overlap region fails, the other of the light sources (second semiconductor light emitting element corresponding to the second pixel) in the overlap region is controlled. This can complement the luminous intensity of a pixel portion corresponding to the failed semiconductor light emitting element in the predetermined light distribution pattern. As a result, it is possible to prevent a dark portion from being formed in the pixel portion corresponding to the failed semiconductor light emitting element in the predetermined light distribution pattern.

In a preferred mode of the invention described above, the vehicular lamp fitting further includes: a reporting means that reports, when the failure of the first semiconductor light emitting element is detected by the failure detection means, the detected failure of the first semiconductor light emitting element.

In a preferred mode of the invention described above, the first light source image and the second light source image are horizontally arranged in a state where a part of the first pixel group and a part of the second pixel group overlap each other.

In a preferred mode of the invention described above, the first light source image and the second light source image are horizontally arranged in a state where all of the first pixel group and at least a part of the second pixel group overlap each other.

### BRIEF DESCRIPTION OF DRAWINGS

FIG. 1 is a schematic configuration diagram of the vehicular lamp fitting 10 and the control system 20 therefor;
FIG. 2A illustrates an example of the ADB light distribution pattern P formed on a virtual vertical screen (e.g., disposed about 25 m ahead of a front surface of the vehicle) directly facing the front surface of the vehicle and FIG. 2B illustrates another example of the ADB light distribution pattern P;
FIG. 3 illustrates the light source images I1 to I4 being formed on a virtual vertical screen S through enlarged projection of the light source images of the light sources LS1 to LS4 using the projection lenses OP1 to OP4;
FIG. 4 is a front view (perspective view) of the projection lenses OP1 to OP4;
FIG. 5 illustrates the modification of the ADB light distribution pattern P;
FIG. 6 illustrates the modification of the arrangement of the light sources LS (optical axes) relative to the optical axes of the projection lenses OP;
FIG. 7 illustrates an example of the light source images I formed when the light source LS2 (optical axis AXLS2) is disposed in coincident relation with the optical axis AXOP2 of the projection lens OP2 corresponding to the light source LS2 (see FIG. 6);

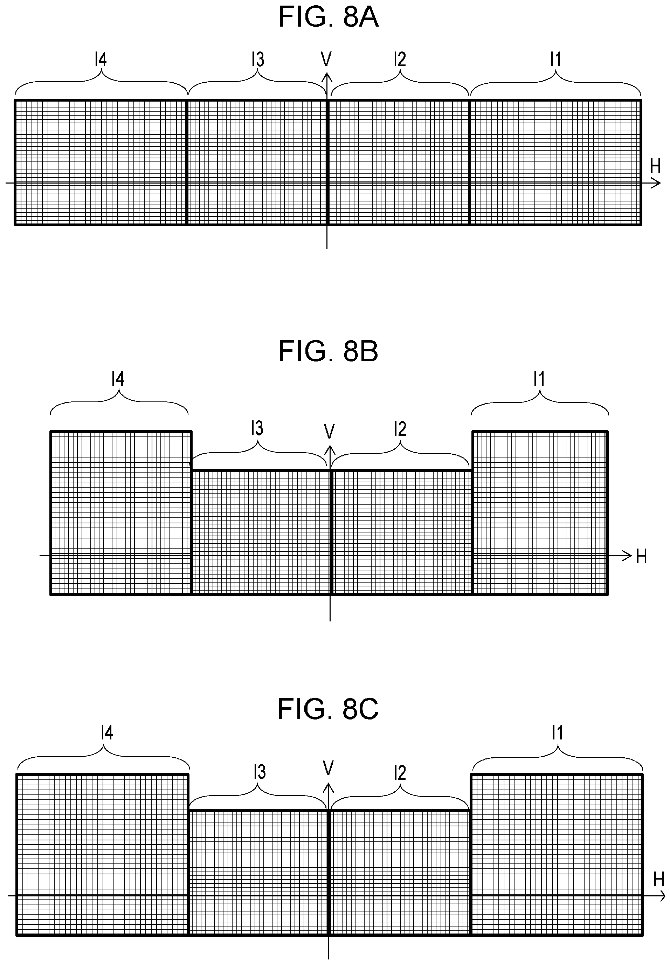

FIG. 8A illustrates an example of the light source images I formed when the projection magnifications (magnifications in the X-axis direction) of the projection lenses OP1 and OP4 are higher than those of the other projection lenses OP2 and OP3 and FIG. 8B illustrates an example of the light source images I when the projection magnifications (magnifications in the Y-axis direction) of the projection lenses OP1 and OP4 are higher than those of the other projection lenses OP2 and OP3 and FIG. 8C illustrates an example of the light source images I formed when the projection magnifications (magnifications in the X-axis direction and magnifications in the Y-axis direction) of the projection lenses OP1 and OP4 are higher than those of the other projection lenses OP2 and OP3;
FIG. 9 illustrates an example of the light source images I1 to I4 formed when a light source in which one semiconductor light emitting element (e.g., LED chip) is disposed in a rectangular region (e.g., about 4 mm square) is used as each of the light sources LS;
FIG. 10 is a horizontal sectional view of the light source LS2 and the projection lens OP2;
FIG. 11A illustrates a relationship between the light source LS2 (light emitting surface LS2a) and the image circle C1 of the projection lens OP2 and FIG. 11B illustrates a relationship between the light source LS1 (light emitting surface LS1a) and the image circle C2 of the projection lens OP1;
FIG. 12 is a horizontal sectional view of the light source LS1 and the projection lens OP1;
FIG. 13 illustrates a relationship between the light source LS2 (light emitting surface LS2a) and an image circle C3 of the projection lens OP2 when the light source LS2 (optical axis AXLS2) is disposed in coincident relation with the optical axis AXOP2 of the projection lens OP2 corresponding to the light source LS2;
FIG. 14 is a horizontal sectional view of the vehicular lamp fitting 10B according to Third Embodiment;
FIG. 15A illustrates a relationship between the light source LS5 (light emitting surface LS5a) and the image circle C4 of the projection lens OP5 and FIG. 15B illustrates a relationship between the light source LS6 (light emitting surface LS6a) and the image circle C5 of the projection lens OP6;
FIG. 16 illustrates an example of the ADB light distribution pattern P (light source image) formed by the vehicular lamp fitting 10B according to Third Embodiment;
FIG. 17A illustrates an example of the ADB light distribution pattern P formed on a virtual vertical screen (e.g., disposed about 25 m ahead of the front surface of the vehicle) directly facing the front surface of the vehicle and FIG. 17B is a graph representing a luminous intensity distribution in a horizontal cross section along a line A-A in FIG. 17A;
FIGS. 18A and 18B illustrate an example of the turning ON/OFF control of the light sources LS (semiconductor light emitting element groups);
FIGS. 19A and 19B illustrate another example of the turning ON/OFF control of the light sources LS (semiconductor light emitting element groups);
FIGS. 20A and 20B illustrate another example of the turning ON/OFF control of the light sources LS (semiconductor light emitting element groups);
FIGS. 21A and 21B illustrate another example of the turning ON/OFF control of the light sources LS (semiconductor light emitting element groups);
FIG. 22 is a schematic configuration diagram of the control system 20A that performs the complementary process;
FIG. 23 is a flow chart for illustrating an example of the operation (complementary process which complements the failed light source LS (semiconductor light emitting elements)) of the control system 20A;
FIGS. 24A to 24C illustrate another example of the turning ON/OFF control of the light sources LS (semiconductor light emitting element groups);
FIG. 25 is a graph illustrating a luminous intensity distribution in the ADB light distribution pattern P in which the luminous intensity of the portion corresponding to the pixel PX1 has deteriorated;
FIG. 26 is a view illustrating the modification of the arrangement of the light source images I;
FIG. 27 is a schematic configuration diagram of the vehicular lamp fitting 10C according to Sixth Embodiment;
FIG. 28 illustrates an example of the ADB light distribution pattern P formed on a virtual vertical screen (e.g., disposed about 25 m ahead of the front surface of the vehicle) directly facing the front surface of the vehicle;
FIG. 29 illustrates an example (schematic perspective view) of the magnification varying lens 14;
FIGS. 30A and 30B are transverse sectional views of the magnification varying lens 14 and FIG. 30C is a vertical sectional view (schematic diagram) of the magnification varying lens 14;
FIG. 31 is a perspective view of the lens group included in the projection lenses OP1 to OP4 and the magnification varying lens 14;
FIG. 32 is a front view (perspective view) of the first lens body LE1;
FIG. 33 is a horizontal sectional view of the vehicular lamp fitting 10D according to Seventh Embodiment;
FIG. 34 illustrates an example of the ADB light distribution pattern P formed on a virtual vertical screen (e.g., disposed about 25 m ahead of the front surface of the vehicle) directly facing the front surface of the vehicle;
FIG. 35 is a horizontal sectional view of the vehicular lamp fitting 10E according to Eighth Embodiment;
FIG. 36 illustrates an example of the ADB light distribution pattern P formed on a virtual vertical screen (e.g., disposed about 25 m ahead of the front surface of the vehicle) directly facing the front surface of the vehicle;
FIG. 37 is obtained by adding the magnification varying lens 14 to FIG. 3;
FIG. 38 illustrates an example of a vehicular lamp fitting 10F using the DMD 30; and
FIG. 39 illustrates an example of a vehicular lamp fitting 10G using the LCD 40.

### DESCRIPTION OF EMBODIMENTS

### First Embodiment

The following will describe a vehicular lamp fitting 10 according to First Embodiment of the present invention and a control system 20 therefor with reference to the accompanying drawings. Corresponding components in the individual drawings are given the same reference numerals, and a repeated description thereof is omitted.

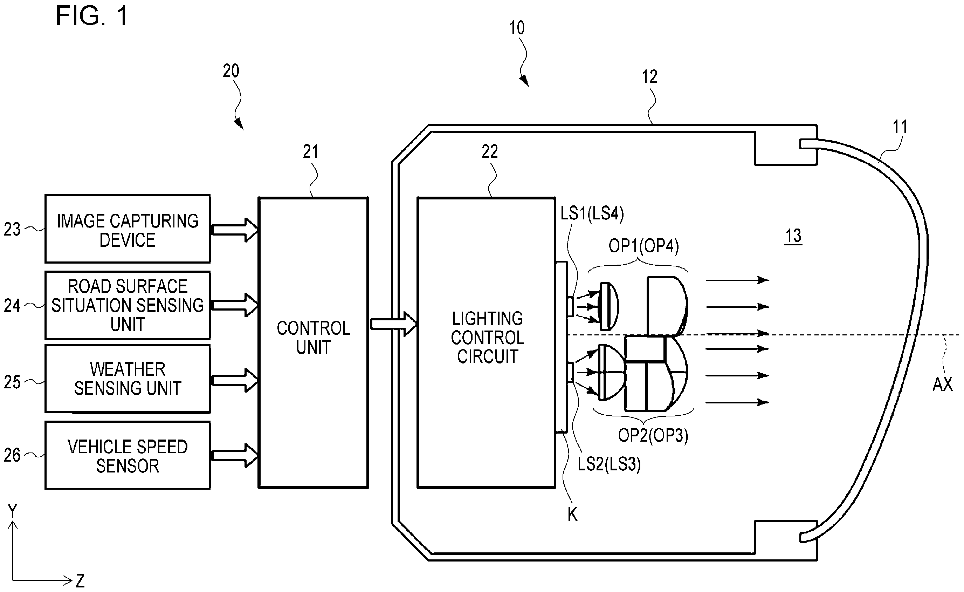

FIG. 1 is a schematic configuration diagram of the vehicular lamp fitting 10 and the control system 20 therefor.

The vehicular lamp fitting 10 (vehicular lamp fitting unit) illustrated in FIG. 1 is a variable-light-distribution-type vehicular headlamp capable of forming an adaptive driving beam (ADB) light distribution pattern, which is mounted on each of a left side and a right side of a front end portion of a vehicle (not shown and hereinafter referred to as the host vehicle). The vehicular lamp fitting 10 is disposed in a lighting chamber 13 defined by an outer lens 11 and a housing 12 and fixed to the housing 12 or the like. For convenience of description, an X-axis, a Y-axis, and a Z-axis will be defined below. The X-axis extends in a vehicle width direction, the Y-axis extends in a vertical direction, and the Z-axis extends in a vehicle front-rear direction.

First, a description will be given of an ADB light distribution pattern P. The ADB light distribution pattern P is an example of a predetermined light distribution pattern of the present invention.

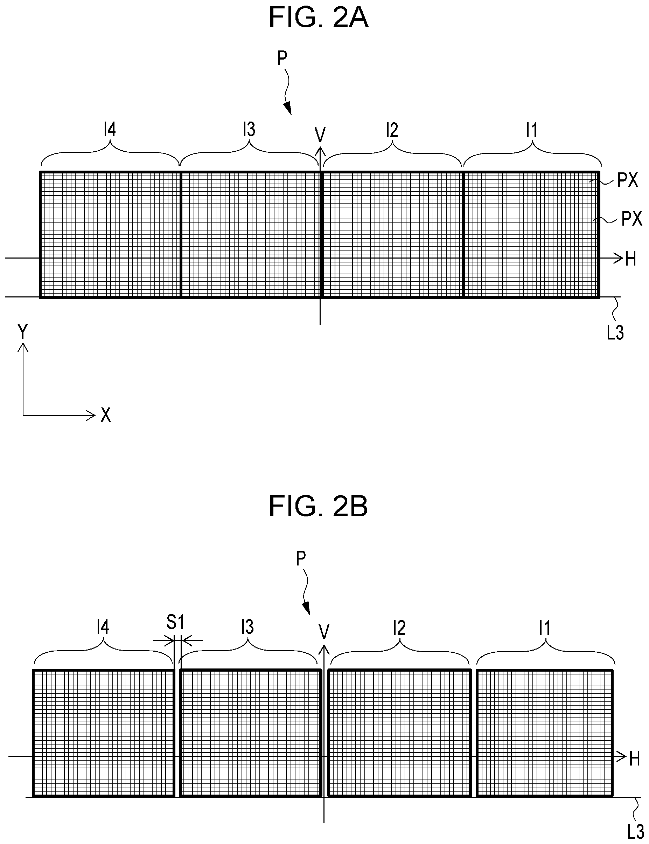

FIG. 2A illustrates an example of the ADB light distribution pattern P formed on a virtual vertical screen (e.g., disposed about 25 m ahead of a front surface of the vehicle) directly facing the front surface of the vehicle. FIG. 2B illustrates another example of the ADB light distribution pattern P.

As illustrated in FIG. 2A, the ADB light distribution pattern P includes four light source images I1 to I4 arranged in a horizontal direction. When the light source images I1 to I4 are not particularly distinguished from each other, the light source images I1 to I4 are hereinafter referred to as light source images I.

The light source images I are disposed on the virtual vertical screen to be in gaplessly adjacent relation in the horizontal direction (X-axis direction) by performing enlarged projection of light source images of light sources using projection lenses, as will be described later.

The "gaplessly adjacent relation" indicates a state (see FIG. 2A) where the light source images I adjacent to each other has no space between the left side (or right side) of one of the light source images I and the right side (or left side) of another of the light source images I and a state where, as illustrated in FIG. 2B, even when the light source images I adjacent to each other have a space S1 between the left side (or right side) of one of the light source images I and the right side (or left side) of another of the light source images I, the space S1 is narrow and visually unrecognizable or cannot be discerned (i.e. a state where the light source images I can be assessed to be visually gaplessly adjacent to each other).

The light source images are disposed in a state where respective upper sides (and lower sides) thereof correspond to the horizontal direction (X-axis direction) and the respective left sides (and right sides) thereof correspond to the vertical direction (Y-axis direction).

The light source images I include a plurality of pixels which are individually turned ON/OFF (including a case of being dimmed) in response to turning ON/OFF control of the light sources (a plurality of semiconductor light emitting elements), as will be described later. Each of rectangles PX in FIG. 2A represents the pixel which is individually turned ON/OFF. The pixels are hereinafter referred to as the pixels PX.

In the light source images I having the configuration described above, by e.g., turning OFF (or dimming) the pixels PX corresponding to an object to be masked (moving body such as a leading vehicle or an oncoming vehicle) in front of the host vehicle and turning ON the other pixels PX, it is possible to form the ADB light distribution pattern P including a non-illuminating region which does not illuminate the object to be masked.

Next, a description will be given of an example of a configuration of the vehicular lamp fitting 10 which forms the ADB light distribution pattern P including the light source images I described above.

As illustrated in FIG. 1, the vehicular lamp fitting 10 includes light sources LS1 to LS4 and projection lenses OP1 to OP4 corresponding to the light sources LS1 to LS4. When the light sources LS1 to LS4 are not particularly distinguished from each other, the light sources LS1 to LS4 are hereinafter referred to as the light sources LS. Meanwhile, when the projection lenses OP1 to OP4 are not particularly distinguished from each other, the projection lenses OP1 to OP4 are referred to as the projection lenses OP.

The light sources LS are semiconductor light emitting elements which emit white light, such as LEDs. The following will describe an example using, as the light sources LS, matrix light sources each including a plurality of semiconductor light emitting elements (e.g., a total of 1024 LED chips (pixels) arranged in 32 columns and 32 rows) arranged in a matrix configuration in a rectangular region (e.g., about 4 mm square). The matrix light sources are referred to also as LED array light sources or pixel LEDs. Note that the light sources LS1 to LS4 may also be light source other than the matrix light sources, e.g., light sources each including one semiconductor light emitting element (e.g., LED chip) having an about 4 mm square light emitting surface.

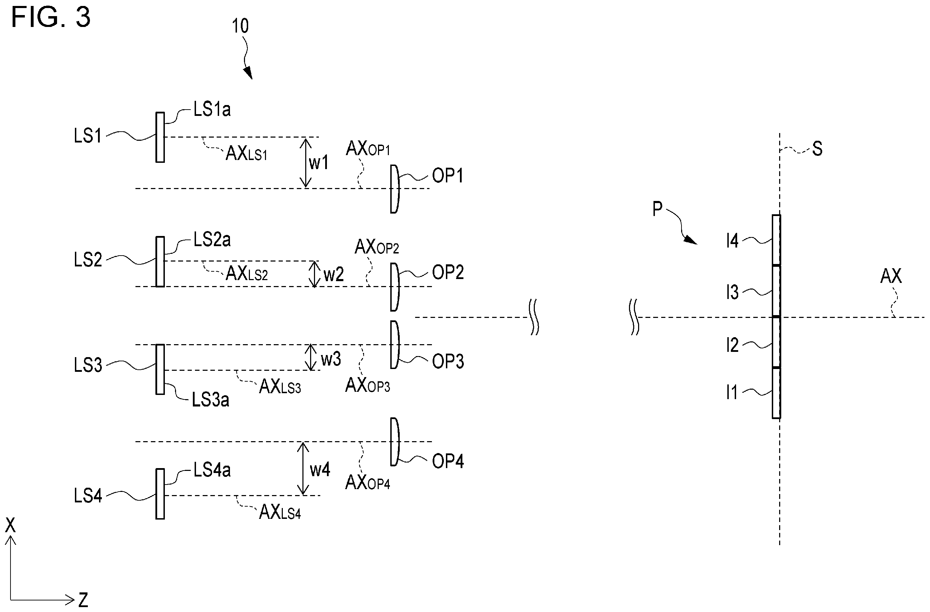

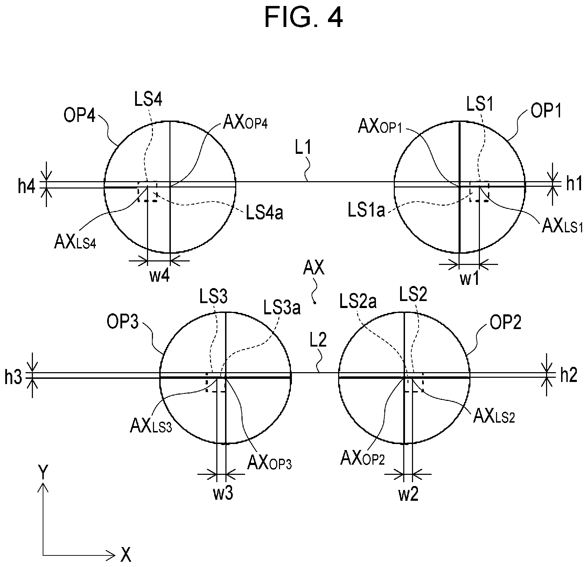

FIG. 3 illustrates the light source images I1 to I4 being formed on a virtual vertical screen S through enlarged projection of the light source images of the light sources LS1 to LS4 using the projection lenses OP1 to OP4. FIG. 4 is a front view (perspective view) of the projection lenses OP1 to OP4 illustrating a layout of the light sources LS1 to LS4, the projection lenses OP1 to OP4, and the like.

As illustrated in FIGS. 3 and 4, the light sources LS1 to LS4 include light emitting surfaces LS1a to LS4a. An optical axis AX_{LS1} of the light source LS1 passes through a center of the light emitting surface LS1a of the light source LS1 to extend in a direction (Z-axis direction) perpendicular to the light emitting surface LS1a. The same applies also to optical axes AX_{LS2} to AX_{LS4} of the light sources LS2 to LS4. The optical axes AX_{LS1} to AX_{LS4} of the light sources LS1 to LS4 are parallel with each other.

In consideration of heat dissipation, the light sources LS1 to LS4 having the configuration described above are disposed (mounted) on a common substrate K (see FIG. 1) fixed to a heat sink, the housing, or the like to be spaced apart at sufficient intervals. Each of the intervals is about several tens of millimeters.

Specifically, as illustrated in FIG. 3, the light source LS1 and the light source LS2 are disposed on a left side (left side when facing the virtual vertical screen S) of a lamp fitting optical axis AX, while the light source LS3 and the light source LS4 are disposed on a right side (right side when facing the virtual vertical screen S) of the lamp fitting optical axis AX. As illustrated in FIG. 4, the light source LS1 and the light source LS4 are disposed in a state where respective upper sides thereof are along an upper straight line L1 extending in the X-axis direction, while the light source LS2 and the light source LS3 are disposed in a state where respective upper sides thereof are along a lower straight line L2 extending in the X-axis direction. At that time, the light sources LS1 to LS4 (light emitting surfaces LS1a to LS4a) are disposed on a plane parallel with an XY plane.

In front of the light sources LS1 to LS4, the projection lenses OP1 to OP4 are disposed (see FIG. 3). The projection lenses OP1 to OP4 are an example of projection optical systems of the present invention. Examples of a material of the projection lenses OP1 to OP4 include a transparent resin such as acryl or polycarbonate. The projection lenses OP1 to OP4 are disposed in front of the light sources LS1 to LS4, while being held by a holding member fixed to the heat sink, the housing, or the like, though not shown.

Each of the projection lenses OP1 to OP4 is a projection lens having aberrations (such as field curvature and chromatic aberration) corrected so as to have a flat image plane. The projection lenses OP1 to OP4 may be formed of a plurality of lenses (see FIG. 1) or may also be formed of one lens. The light source LS1 is disposed along the image plane (flat plane) of the projection lens OP1. The same applies also to the light sources LS2 to LS4. The projection lenses OP1 to OP4 have equal projection magnifications.

The projection lenses OP1 to OP4 have respective optical axes AX_{OP1} to AX_{OP4} parallel with each other and extending in the Z-axis direction. Note that the optical axes AX_{OP1} to AX_{OP4} of the projection lenses OP1 to OP4 are disposed to be spaced apart from each other, but intervals therebetween are narrow (about several tens of millimeters), and therefore the optical axes AX_{OP1} to AX_{OP4} of the projection lenses OP1 to OP4 can be regarded as the same as the lamp fitting optical axis AX. The lamp fitting optical axis AX extends in the Z-axis direction.

As illustrated in FIGS. 3 and 4, the light source LS1 is disposed so as to be offset from the optical axis AX_{OP1} of the projection lens OP1 corresponding to the light source LS1. The same applies also to the light sources LS2 to LS4.

For example, the light source LS2 (optical axis AX_{LS2}) is disposed to be offset leftward (leftward when facing the virtual vertical screen S, as shown in FIG. 3) by a deviation amount w2 from the optical axis AX_{OP2} of the projection lens OP2 in the horizontal direction (X-axis direction). Consequently, the light source image I2 enlargedly projected by the projection lens OP2 is disposed on the virtual vertical screen S to be offset rightward by an amount corresponding to the deviation amount w2 from the lamp fitting optical axis AX (or a vertical straight line V).

In accordance with this principle, by appropriately adjusting (setting) the deviation amount w2, it is possible to dispose the light source image I2 on the virtual vertical screen S such that the left side thereof coincides with (or substantially coincides with) the vertical straight line V, as illustrated in FIGS. 2A and 2B.

Also, the light source LS2 (upper side of the light source LS2) is disposed to be offset upward by a deviation amount h2 from the optical axis AX_{OP2} of the projection lens OP2 in the vertical direction (Y-axis direction) (see FIG. 4). Consequently, the light source image I2 enlargedly projected by the projection lens OP2 is disposed on the virtual vertical screen S to be offset downward by an amount corresponding to the deviation amount h2 from the lamp fitting optical axis AX (or a horizontal line H).

Accordingly, by appropriately adjusting (setting) the deviation amount h2, the light source image I2 can be disposed on the virtual vertical screen S such that a lower side thereof coincides with (or substantially coincides with) a straight line L3 extending in the X-axis direction, as illustrated in FIGS. 2A and 2B.

Meanwhile, the light source LS1 (optical axis AX_{LS1}) is disposed to be offset leftward (leftward when facing the virtual vertical screen S, as shown in FIG. 3) by a deviation amount w1 (w1 > w2) from the optical axis AX_{OP1} of the projection lens OP1 in the horizontal direction (X-axis direction). Consequently, the light source image I1 enlargedly projected by the projection lens OP1 is disposed on the virtual vertical screen S to be offset rightward by an amount corresponding to the deviation amount w1 from the lamp fitting optical axis AX (or vertical straight line V).

In accordance with this principle, by appropriately adjusting (setting) the deviation amount w1, it is possible to dispose the light source image I1 on the virtual vertical screen S such that a left side thereof coincides with (or substantially coincides with) a right side of the light source image 12, as illustrated in FIGS. 2A and 2B.

Also, the light source LS1 (upper side of the light source LS1) is disposed to be offset upward by a deviation amount h1 from the optical axis AX_{OP1} of the projection lens OP1 in the vertical direction (Y-axis direction) (see FIG. 4). Consequently, the light source image I1 enlargedly projected by the projection lens OP1 is disposed on the virtual vertical screen S to be offset downward by an amount corresponding to the deviation amount h1 from the lamp fitting optical axis AX (or horizontal line H).

Accordingly, by appropriately adjusting (setting) the deviation amount h1, it is possible to dispose the light source image I1 on the virtual vertical screen S such that a lower side thereof coincides with (or substantially coincides with) the straight line L3 extending in the X-axis direction, as illustrated in FIGS. 2A and 2B.

Meanwhile, the light source LS3 (optical axis AX_{LS3}) is disposed to be offset rightward (rightward when facing the virtual vertical screen S, as shown in FIG. 3) by a deviation amount w3 from the optical axis AX_{OP3} of the projection lens OP3 in the horizontal direction (X-axis direction). Consequently, the light source image I3 enlargedly projected by the projection lens OP3 is disposed on the virtual vertical screen S to be offset leftward by an amount corresponding to the deviation amount w3 from the lamp fitting optical axis AX (or vertical straight line V).

In accordance with this principle, by appropriately adjusting (setting) the deviation amount w3, it is possible to dispose the light source image I3 on the virtual vertical screen S such that a right side thereof coincides with (or substantially coincides with) the vertical straight line V, as illustrated in FIGS. 2A and 2B.

Also, the light source LS3 (upper side of the light source LS3) is disposed to be offset upward by a deviation amount h3 from the optical axis AX_{OP3} of the projection lens OP3 in the vertical direction (Y-axis direction) (see FIG. 4). Consequently, the light source image I3 enlargedly projected by the projection lens OP3 is disposed on the virtual vertical screen S to be offset downward by an amount corresponding to the deviation amount h3 from the lamp fitting optical axis AX (or horizontal line H).

Accordingly, by appropriately adjusting (setting) the deviation amount h3, it is possible to dispose the light source image I3 on the virtual vertical screen S such that a lower side thereof coincides with (or substantially coincides with) the straight line L3 extending in the X-axis direction, as illustrated in FIGS. 2A and 2B.

Meanwhile, the light source LS4 (optical axis AX_{LS4}) is disposed to be offset rightward (rightward when facing the virtual vertical screen S, as shown in FIG. 3) by a deviation amount w4 (w4 > w3) from the optical axis AX_{OP4} of the projection lens OP4 in the horizontal direction (X-axis direction). Consequently, the light source image I4 enlargedly projected by the projection lens OP4 is disposed on the virtual vertical screen S to be offset leftward by an amount corresponding to the deviation amount w4 from the lamp fitting optical axis AX (or vertical straight line V).

In accordance with this principle, by appropriately adjusting (setting) the deviation amount w4, it is possible to dispose the light source image I4 on the virtual vertical screen S such that a right side thereof coincides with (or substantially coincides with) a left side of the light source image 13, as illustrated in FIGS. 2A and 2B.

Also, the light source LS4 (upper side of the light source LS4) is disposed to be offset upward by a deviation amount h4 from the optical axis AX_{OP4} of the projection lens OP4 in the vertical direction (Y-axis direction) (see FIG. 4). Consequently, the light source image I4 enlargedly projected by the projection lens OP4 is disposed on the virtual vertical screen S to be offset downward by an amount corresponding to the deviation amount h4 from the lamp fitting optical axis AX (or horizontal line H).

Accordingly, by appropriately adjusting (setting) the deviation amount h4, it is possible to dispose the light source image I4 on the virtual vertical screen S such that a lower side thereof coincides with (or substantially coincides with) the straight line L3 extending in the X-axis direction, as illustrated in FIGS. 2A and 2B.

By thus appropriately adjusting (setting) the deviation amounts w1 to w4 of the light sources LS1 to LS4 (optical axes AX_{LS1} to AX_{LS4}) from the optical axes AX_{OP1} to AX_{OP4} of the projection lenses OP1 to OP4 in the horizontal direction (X-axis direction), the light source images I1 to I4 can be formed on the virtual vertical screen S to be in gaplessly adjacent relation in the horizontal direction (X-axis direction).

In addition, by appropriately adjusting (setting) the deviation amounts h1 to h4 of the light sources LS1 to LS4 from the optical axes AX_{OP1} to AX_{OP4} of the projection lenses OP1 to OP4 in the vertical direction (Y-axis direction), the light source images I1 to I4 can be formed on the virtual vertical screen S such that the respective lower sides thereof coincide (or substantially coincide) with the straight line L3 (see FIGS. 2A and 2B) extending in the X-axis direction.

The adjustment of the deviation amounts w1 to w4 and h1 to h4 described above can be performed using, e.g., predetermined simulation software.

Next, a description will be given of an example of a configuration of the control system 20 that controls the vehicular lamp fitting 10 having the configuration described above.

As illustrated in FIG. 1, the control system 20 includes a control unit 21. The control unit 21 is connected to each of a lighting control circuit 22, an image capturing device 23, a road surface situation sensing unit 24, a weather sensing unit 25, a vehicle speed sensor 26, and the like. Note that the control unit 21 is also connected to another sensor such as a steering angle sensor. The control unit 21 and the lighting control circuit 22 are an example of control means of the present invention.

For example, the control unit 21 is an ECU (Electronic Control Unit) including a CPU, a RAM, and a ROM, though not shown.

The lighting control circuit 22 is connected to the light sources LS1 to LS4. The lighting control circuit 22 individually controls turning ON/OFF (or dimming) of the plurality of semiconductor light emitting elements (pixels) included in the light sources LS1 to LS4 under control of the control unit 21.

The image capturing device 23 includes a camera for capturing an image of a scene in front of the host vehicle, though not shown. The camera is an image capturing element such as a CCD sensor or a CMOS sensor and periodically (e.g., every 30 fps) captures an image including the object to be masked (moving body such as a leading vehicle or an oncoming vehicle) in front of the host vehicle. For example, the image capturing device 23 is provided in a vehicle compartment of the host vehicle to capture an image of the scene in front of the vehicle through a front windshield.

The road surface situation sensing unit 24 is means for sensing a road surface situation on a road being traveled by the host vehicle and is, e.g., a car navigation system.

The weather sensing unit 25 is means for detecting current weather around the host vehicle and is, e.g., a raindrop sensor, a fog sensor, or means for detecting an ON/OFF state of a windshield wiper.

For example, the control unit 21 performs the following processing through execution of a predetermined program read from the ROM into the RAM or the like by the CPU.

For example, when the object to be masked (e.g., the oncoming vehicle) is recognized based on the image captured by the image capturing device 23 or the like, the control unit 21 controls the lighting control circuit 22 to turn OFF (or dim) the semiconductor light emitting elements (pixels) of the light sources LS1 to LS4 corresponding to the recognized object to be masked and turn ON the other semiconductor light emitting elements.

According to the control by the control unit 21, the lighting control circuit 22 applies, to each of the semiconductor light emitting elements (pixels) of the light sources LS1 to LS4, a drive current adjusted to turn OFF (or dim) the semiconductor light emitting elements (pixels) corresponding to the recognized object to be masked and turn ON the other semiconductor light emitting elements.

As a result, images corresponding to the light source images I1 to I4 are formed individually on the respective light emitting surfaces LS1a to LS4a of the light sources LS1 to LS4. Each of these images is formed as an image including the total of 1024 semiconductor light emitting elements (pixels) arranged in 32 columns and 32 rows. The images are enlargedly projected by the projection lenses OP1 to OP4 to form the ADB light distribution pattern P including the light source images I1 to 14. Light beams emitted from the semiconductor light emitting elements (pixels) and transmitted by the projection lenses OP1 to OP4 radiate in respective angular directions (angular ranges) with respect to the lamp fitting optical axis AX which correspond to respective positions of the individual pixels.

As described above, a configuration and processing for thus controlling the turning ON/OFF of the light sources LS (plurality of semiconductor light emitting elements) are well known (see, e.g., Japanese Patent Application Publication No. 2018-58412), and therefore a further description thereof is omitted.

As described above, according to First Embodiment, it is possible to provide the vehicular lamp fitting 10 which allows, even when intervals at which the light sources LS1 to LS4 are arranged are increased (see FIG. 4), the light source image I1 to I4 to be arranged in gaplessly adjacent relation in the horizontal direction (X-axis direction) (see FIGS. 2A and 2B).

This is because the plurality of projection lenses OP1 to OP4 corresponding to the plurality of light sources LS1 to LS4 are provided, and the light sources LS1 to LS4 are disposed to be offset from the optical axes AX_{OP1} to AX_{OP4} of the projection lenses OP1 to OP4 corresponding to the light sources LS1 to LS4 (see FIGS. 3 and 4).

Also, according to First Embodiment, the intervals at which the light sources LS1 to LS4 are arranged can be increased, and therefore heat dissipation performance can be enhanced.

Next, a description will be given of modifications.

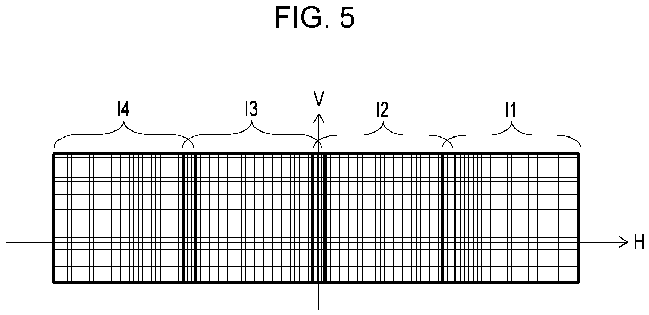

FIG. 5 illustrates the modification of the ADB light distribution pattern P.

In the embodiment described above, the description has been given of the example (see FIG. 2A) in which the light source images I adjacent to each other are arranged in a state where the left side (or right side) of one of the light source images I and the right side (left side) of another of the light source images I coincide with each other. However, the arrangement of the light source images I adjacent to each other is not limited thereto.

For example, as illustrated in FIG. 5, the light source images I adjacent to each other may also be arranged in partially overlapping relation. By adjusting (setting) the deviation amounts w1 to w4 of the light sources LS1 to LS4 (optical axes AX_{LS1} to AX_{LS4}) with respect to the optical axes AX_{OP1} to AX_{OP4} of the projection lenses OP1 to OP4 in the horizontal direction (X-axis direction), the light source images I adjacent to each other can be formed on the virtual vertical screen S to be in partially overlapping relation in the horizontal direction (X-axis direction) (i.e., in gaplessly adjacent relation).

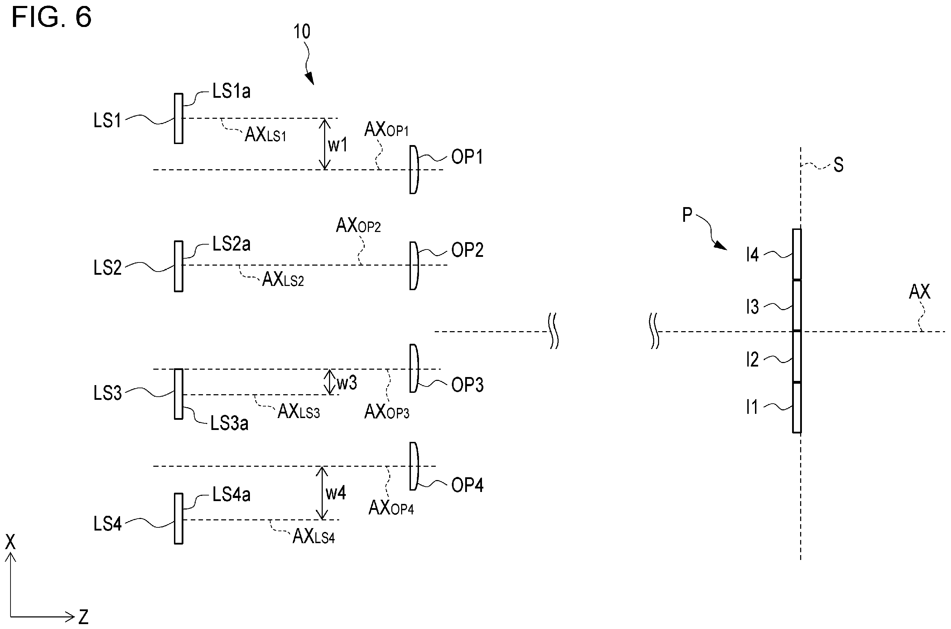

FIG. 6 illustrates the modification of the arrangement of the light sources LS (optical axes) relative to the optical axes of the projection lenses OP.

In the embodiment described above, the description has been given of the example (see FIG. 3) in which all the light sources LS1 to LS4 (optical axes AX_{LS1} to AX_{LS4}) are disposed to be horizontally offset from the respective optical axes AX_{OP1} to AX_{OP4} of the projection lenses OP1 to OP4. However, the arrangement of the light sources LS1 to LS4 is not limited thereto.

For example, at least one of the light sources may also be disposed in coincident relation with the optical axis of the projection lens corresponding to the light source.

For example, as illustrated in FIG. 6, the light source LS2 (optical axis AX_{LS2}) may also be disposed in coincident relation with the optical axis AX_{OP2} of the projection lens OP2 corresponding to the light source LS2. The other light sources LS1, LS3, and LS4 (optical axes AX_{LS2}, AX_{LS3}, and AX_{LS4}) may also be disposed to be horizontally offset from the optical axes AX_{OP1}, AX_{OP3}, and AX_{OP4}) of the projection lenses OP1, OP3, and OP4 corresponding to the other light sources LS1, LS3, and LS4.

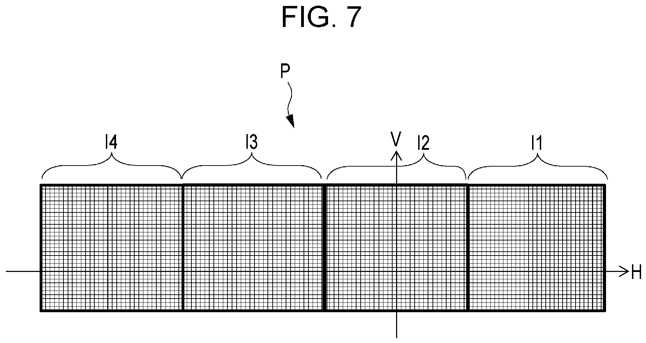

FIG. 7 illustrates an example of the light source images I formed when the light source LS2 (optical axis AX_{LS2}) is disposed in coincident relation with the optical axis AX_{OP2} of the projection lens OP2 corresponding to the light source LS2 (see FIG. 6).

Also, in the embodiment described above, the description has been given of the example (see FIGS. 2A and 2B) in which each of the number of the light sources LS1 to LS4 and the number of the light source images I1 to I4 is four. However, each of the number of the light sources LS1 to LS4 and the number of the light source images I1 to I4 is not limited thereto. In other words, it is sufficient that the plurality of light sources LS and the plurality of light source images I are provided, and each of the number of the light sources LS1 to LS4 and the number of the light source images I1 to I4 may also be 2, 3, 5, or more.

Also, in the embodiment described above, the description has been given of the example in which the respective projection magnifications of the projection lenses OP1 to OP4 are equal. However, the respective projection magnifications of the projection lenses OP1 to OP4 are not limited thereto.

For example, any of the projection lenses OP1 to OP4 may have the projection magnification different from the projection magnifications of the other projection lenses.

FIG. 8A illustrates an example of the light source images I formed when the projection magnifications (magnifications in the X-axis direction) of the projection lenses OP1 and OP4 are higher than those of the other projection lenses OP2 and OP3. FIG. 8B illustrates an example of the light source images I when the projection magnifications (magnifications in the Y-axis direction) of the projection lenses OP1 and OP4 are higher than those of the other projection lenses OP2 and OP3. FIG. 8C illustrates an example of the light source images I formed when the projection magnifications (magnifications in the X-axis direction and magnifications in the Y-axis direction) of the projection lenses OP1 and OP4 are higher than those of the other projection lenses OP2 and OP3.

Also, in the embodiment description above, the description has been given of the example in which the vehicular lamp fitting 10 is formed of the one vehicular lamp fitting unit including the light sources LS1 to LS4 and the projection lenses OP1 to OP4. However, the configuration of the vehicular lamp fitting 10 is not limited thereto. For example, the vehicular lamp fitting 10 may also be formed of a plurality of vehicular lamp fitting units such as a first vehicular lamp fitting unit including the light source LS1 and the projection lens OP1, a second vehicular lamp fitting unit including the light source LS2 and the projection lens OP2, a third vehicular lamp fitting unit including the light source LS3 and the projection lens OP3, and a fourth vehicular lamp fitting unit including the light source LS4 and the projection lens OP4.

Also, in the embodiment described above, the description has been given of the example (see FIGS. 2A and 2B) in which the light source images I1 to I4 are arranged symmetrically with respect to the vertical straight line V. However, the arrangement thereof is not limited thereto. For example, the light source images I1 to I4 may also be arranged non-symmetrically with respect to the vertical straight line V (see FIG. 7).

Also, in the embodiment described above, the description has been given of the example in which the light sources LS1 to LS4 are arranged as illustrated in FIG. 4. However, the arrangement of the light sources LS1 to LS4 is not limited thereto.

Specifically, as long as the light sources LS1 to LS4 are disposed to be offset from the optical axes AX_{OP1} to AX_{OP4} of the projection lenses OP1 to OP4 corresponding to the light sources LS1 to LS4, the light sources LS1 to LS4 may be arranged in any manner. For example, the light sources LS1 to LS4 may also be arranged in a horizontal row, in a vertical column, or in a diagonal line. Alternatively, the light sources LS1 to LS4 may also be arranged randomly with respect to the X-axis direction and the Y-axis direction.

Even when the light sources LS1 to LS4 are thus arranged, by appropriately adjusting (setting) the deviation amounts w1 to w4 of the light sources LS1 to LS4 (optical axes AX_{LS1} to AX_{LS4}) from the optical axes AX_{OP1} to AX_{OP4} of the projection lenses OP1 to OP4 in the horizontal direction (X-axis direction), the light source images I1 to I4 can be formed on the virtual vertical screen S to be in gaplessly adjacent relation in the horizontal direction (X-axis direction).

In addition, by appropriately adjusting (setting) the deviation amounts h1 to h4 of the light sources LS1 to LS4 (optical axes AX_{LS1} to AX_{LS4}) from the optical axes AX_{OP1} to AX_{OP4} of the projection lenses OP1 to OP4 in the vertical direction (Y-axis direction), the light source images I1 to I4 can be formed on the virtual vertical screen S such that the respective lower sides thereof coincide (or substantially coincide) with the straight line L3 (see FIGS. 2A and 2B) extending in the X-axis direction.

Also, in the embodiment described above, the description has been given of the example in which the matrix light source is used as each of the light sources LS. However, the light sources LS are not limited thereto. For example, a light source in which one semiconductor light emitting element (e.g., LED chip) is disposed in a rectangular region (e.g., about 4 mm square) may also be used as each of the light sources LS.

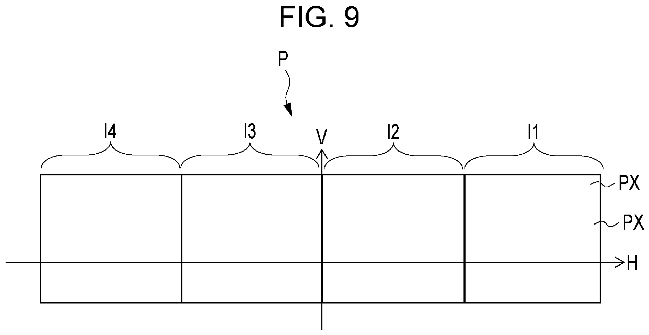

FIG. 9 illustrates an example of the light source images I1 to I4 formed when a light source in which one semiconductor light emitting element (e.g., LED chip) is disposed in a rectangular region (e.g., about 4 mm square) is used as each of the light sources LS.

Also, in each of the embodiments described above, the description has been given of the example in which, as the matrix light source, the matrix light source including the plurality of semiconductor light emitting elements arranged in the matrix configuration (e.g., the total of 1024 LED chips (pixels) arranged in 32 columns and 32 rows) in the rectangular region (e.g., about 4 mm square). However, the matrix light source is not limited thereto.

For example, as the matrix light source, a digital mirror device (DMD) 30 may also be used.

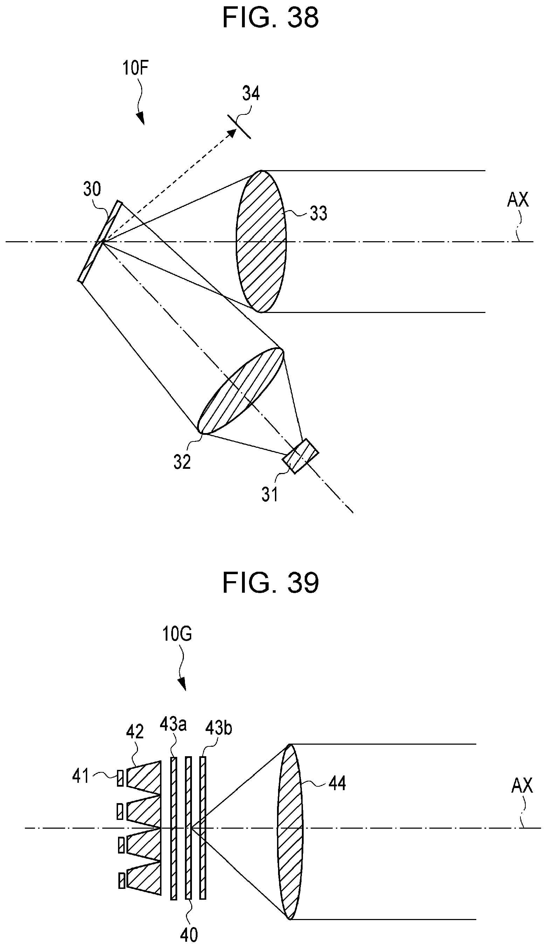

FIG. 38 illustrates an example of a vehicular lamp fitting 10F using the DMD 30.

As illustrated in FIG. 38, the vehicular lamp fitting 10F using the DMD 30 according to the present modification includes a light source 31 (e.g., semiconductor light emitting elements such as LEDs), a condensing lens 32, the DMD 30, a projection lens 33, an unneeded light absorber 34, and the like.

The DMD 30 includes a plurality of micro-mirrors (not shown) arranged in an array configuration. Light from the light source 31 condensed by the condensing lens 32 is incident on the plurality of micro-mirrors. The light reflected by the one of the plurality of micro-mirrors which is at an ON position is incident on the projection lens 33 and transmitted by the projection lens 33 to travel towards the front of the vehicle. Meanwhile, the light reflected by the one of the plurality of micro-mirrors which is at an OFF position is incident on and absorbed by the unneeded light absorber 34. A brightness of each of pixels is individually controlled through individual control of a cycle in which each of the micro-mirrors is turned ON/OFF. A headlamp including the DMD is described in detail in Japanese Patent Application Publication No. 2016-34785, Japanese Patent Application Publication No. 2004-210125, and the like, and therefore a further description thereof is omitted.

By using the DMD 30 (DMD 30, light source 31, and condensing lens 32) described above as the matrix light source, it is possible to achieve the same effects as achieved by the embodiment described above. Specifically, even when the intervals at which the light sources LS1 to LS4 are arranged are increased (see FIG. 4), the light source images I1 to I4 can be arranged in gaplessly adjacent relation in the horizontal direction (X-axis direction) (see FIGS. 2A and 2B). In another embodiment also, the DMD 30 can similarly be used as the matrix light source.

For example, as the matrix light source, a liquid crystal display (LCD) 40 may also be used.

FIG. 39 illustrates an example of a vehicular lamp fitting 10G using the LCD 40.

As illustrated in FIG. 39, the vehicular lamp fitting 10G using the LCD 40 according to the present modification includes light sources 41 (semiconductor light emitting elements such as LEDs), a condensing optical system 42, two polarizing plates 43a and 43b having respective polarization axes perpendicular to each other, the LCD 40 (LCD element) disposed between the two polarizing plates 43a and 43b, a projection lens 44, and the like.

Light from the light sources 41 tuned by the condensing optical system 42 is incident on the LCD 40 in which a polarization direction of each of pixels (not shown) is individually controlled. An amount of light transmitted by each of the pixels is determined by relationships between respective polarization directions of the polarizing plates 43a and 43b and the polarization direction of the light polarized by each of the pixels of the LCD 40. The brightness of each of the pixels is individually controlled through individual control of the polarization direction of each of the pixels. The LCD is described in detail in Japanese Patent Application Publication No. H1-244934, Japanese Patent Application Publication No 2005-183327, and the like, and therefore a further description thereof is omitted.

By using the LCD 40 (LCD 40, light sources 41, condensing optical system 42, and polarizing plates 43a and 43b) as the matrix light source, it is possible to achieve the same effects as achieved by the embodiment described above. Specifically, even when the intervals at which the light sources LS1 to LS4 are arranged are increased (see FIG. 4), the light source images I1 to I4 can be arranged in gaplessly adjacent relation in the horizontal direction (X-axis direction) (see FIGS. 2A and 2B). In another embodiment also, the LCD 40 can similarly be used as the matrix light source.

### Second Embodiment

Next, a description will be given of a vehicular lamp fitting 10A according to Second Embodiment.

The vehicular lamp fitting 10A according to Second Embodiment is different from the vehicular lamp fitting 10 according to First Embodiment described above in that respective image circles of the projection lenses OP2 and OP3 are smaller than respective image circles of the projection lenses OP1 and OP4 and that respective F-numbers of the projection lenses OP2 and OP3 are smaller than respective F-numbers of the projection lenses OP1 and OP4. The configuration of the vehicular lamp fitting 10A is otherwise the same as that of the vehicular lamp fitting 10 according to First Embodiment described above. The following will mainly describe portions different from those of First Embodiment described above. The same components as those of First Embodiment described above are given the same reference numerals, and a description thereof is omitted as appropriate.

The image circle represents a circular range of the projection lens OP in which an image can excellently be formed. When each of the light sources LS (light emitting surfaces LSa) is disposed in the image circle, the light source image I of the light source LS enlargedly projected by the projection lens OP is excellently formed on the virtual vertical screen S to such a degree that light source images (pixels PX) of the individual semiconductor light emitting elements (e.g., 125 µm square) included in the light source LS can be resolved.

The F-number is an index representing a brightness of a lens, which is given by F (F-Number) = Focal Length f of Projection Lens OP/Diameter D of Aperture of Projection Lens OP. In general, a smaller F-number represents a larger amount of captured light (capture angle) and a brighter lens.

Next, a description will be given of an image circle C1 and the F-number of the projection lens OP2. Note that the same applies also to the image circle and the F-number of the projection lens OP3, though the description thereof is omitted.

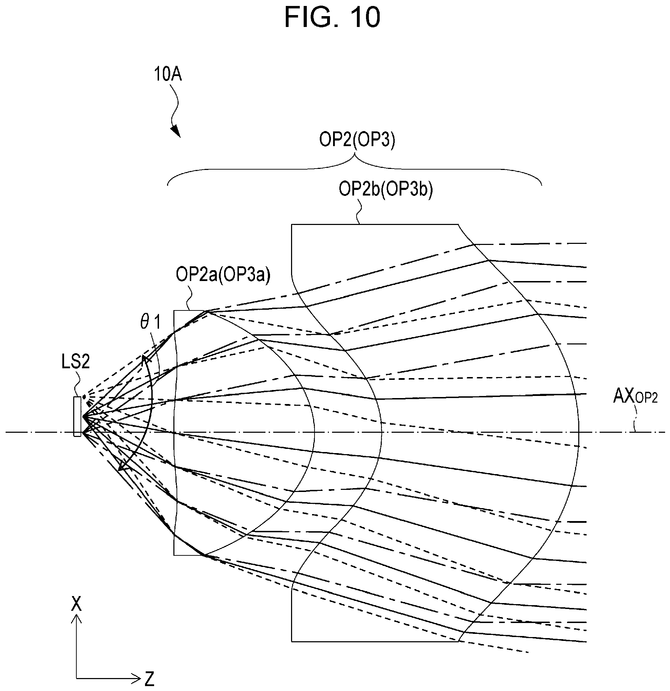

FIG. 10 is a horizontal sectional view of the light source LS2 and the projection lens OP2.

As illustrated in FIG. 10, the projection lens OP2 includes two lenses OP2a and OP2b.

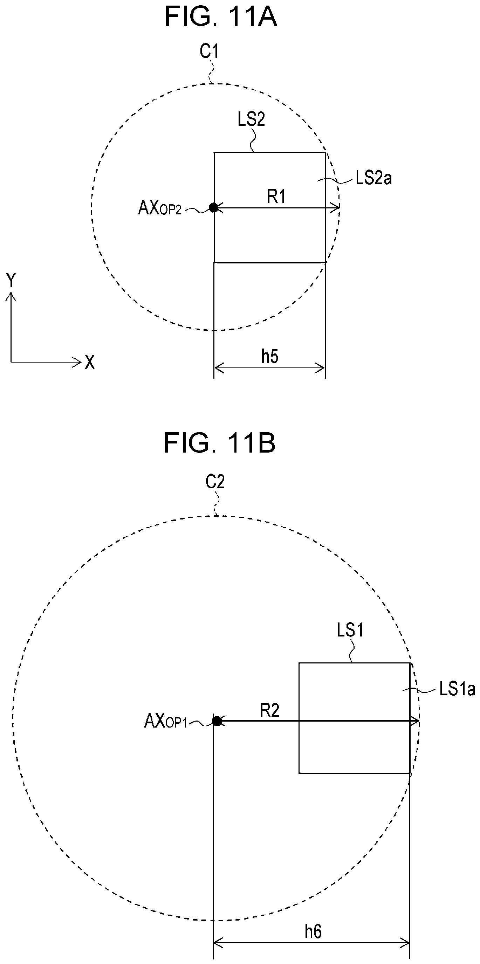

FIG. 11A illustrates a relationship between the light source LS2 (light emitting surface LS2a) and the image circle C1 of the projection lens OP2.

As illustrated in FIG. 11A, the light source LS2 (an example of a first light source of the present invention) is disposed such that a side of the light source LS2 and the optical axis AX_{OP2} of the projection lens OP2 (an example of a first projection optical system of the present invention) are spaced apart at a first distance h5. The projection lens OP2 is designed such that the image circle C1 thereof is in the form of a circle having a minimum radius R1 and encircling the light source LS2 (light emitting surface LS2a).

Preferably, the image circle C1 of the projection lens OP2 is in the form of the circle having the minimum radius R1 and encircling the light source LS2 (light emitting surface LS2a). The reason for this is as follows.

Specifically, when the radius of the image circle C1 is increased, it is difficult to reduce the F-number of the projection lens OP2. Conversely, when the radius of the image circle C1 is set smaller than the minimum radius R1, the resolution of the light source image I2 corresponding to the portion of the light source LS2 (light emitting surface LS2a) protruding from the image circle C1 of the projection lens OP2 deteriorates.

Accordingly, in terms of reducing the F-number of the projection lens OP2 and preventing the deterioration of the resolution of the light source image 12, the image circle C1 of the projection lens OP2 is preferably in the form of the circle having the minimum radius R1 and encircling the light source LS2 (light emitting surface LS2a).

Note that the minimum radius R1 need not be a minimum radius in a strict sense as long as the minimum radius R1 is a substantially minimum radius.

As illustrated in FIG. 10, the projection lens OP2 is designed so as to maximize an angle θ1 at which light from the light source LS2 is captured, i.e., minimize the F-number.

The design can be performed using, e.g., predetermined simulation software.

For example, the light source image I2 enlargedly projected by the projection lens OP2 having the configuration described above is disposed in the vicinity of the vertical straight line V, as illustrated in FIGS. 2A and 2B.

Next, a description will be given of an image circle C2 and the F-number of the projection lens OP1. Note that the same applies also to the image circle and the F-number of the projection lens OP4, though the description thereof is omitted.

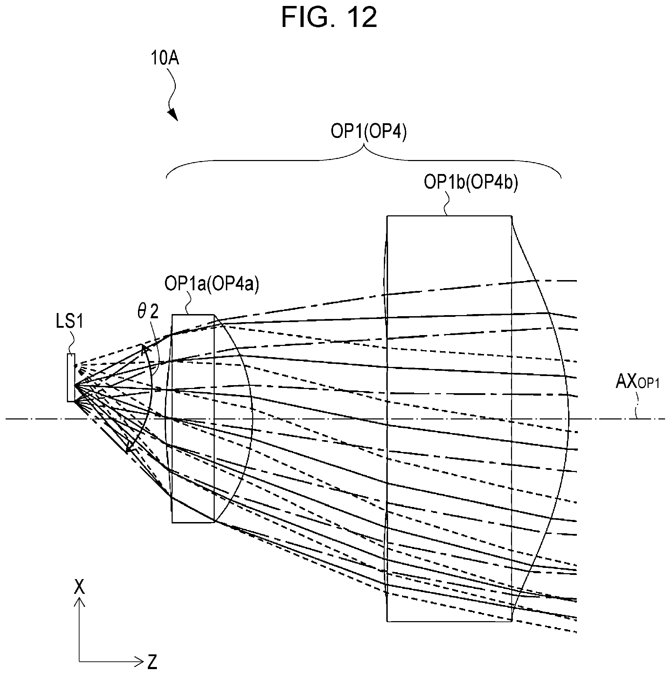

FIG. 12 is a horizontal sectional view of the light source LS1 and the projection lens OP1.

As illustrated in FIG. 12, the projection lens OP1 includes two lenses OP1a and OP1b.

FIG. 11B illustrates a relationship between the light source LS1 (light emitting surface LS1a) and the image circle C2 of the projection lens OP1.

As illustrated in FIG. 11B, the light source LS1 (an example of a second light source of the present invention) is disposed such that a side of the light source LS1 and the optical axis AX_{OP1} of the projection lens OP1 (an example of a second projection optical system of the present invention) are spaced apart at a first distance h6 (h6 > h5). The projection lens OP1 is designed such that the image circle C2 thereof is in the form of a circle having a minimum radius R2 and encircling the light source LS1 (light emitting surface LS1a).

Preferably, the image circle C2 of the projection lens OP1 is in the form of the circle having the minimum radius R2 and encircling the light source LS1 (light emitting surface LS1a). The reason for this is as follows.

Specifically, when the radius of the image circle C2 is increased, it is difficult to reduce the F-number of the projection lens OP1. Conversely, when the radius of the image circle C2 is set smaller than the minimum radius R2, the resolution of the light source image I1 corresponding to the portion of the light source LS1 (light emitting surface LS1a) protruding from the image circle C2 of the projection lens OP1 deteriorates.

Accordingly, in terms of reducing the F-number of the projection lens OP1 and preventing the deterioration of the resolution of the light source image I1, the image circle C2 of the projection lens OP1 is preferably in the form of the circle having the minimum radius R2 and encircling the light source LS1 (light emitting surface LS1a).

Note that the minimum radius R2 need not be a minimum radius in a strict sense as long as the minimum radius R2 is a substantially minimum radius.

As illustrated in FIG. 12, the projection lens OP1 is designed so as to maximize an angle θ2 at which light from the light source LS1 is captured, i.e., minimize the F-number.

The design can be performed using, e.g., predetermined simulation software.

For example, the light source image I1 enlargedly projected by the projection lens OP1 having the configuration described above is disposed away from the vertical straight line V, as illustrated in FIGS. 2A and 2B.

When the projection lenses OP1 and OP2 are designed as described above, as illustrated in FIGS. 11A and 11B, the image circle C1 of the projection lens OP2 is smaller than the image circle C2 of the projection lens OP1. In addition, the capture angle θ1 (see FIG. 10) of the projection lens OP2 is larger than the capture angle θ2 (see FIG. 12) of the projection lens OP1. In other words, the F-number of the projection lens OP2 is smaller than the F-number of the projection lens OP1.

As a result, the light source image I2 enlargedly projected by the projection lens OP2 is brighter than the light source image I1 enlargedly projected by the projection lens OP1.

By also designing the projection lenses OP3 and OP4 in the same manner as the projection lenses OP1 and OP2 are designed, the light source image I3 enlargedly projected by the projection lens OP3 is brighter than the light source image I4 enlargedly projected by the projection lens OP4.

Consequently, as illustrated in FIGS. 2A and 2B, it is possible to form the ADB light distribution pattern P having excellent long distance visibility in which the light source images I2 and I3 disposed in the vicinity of the vertical straight line V are relatively bright, while the light source images I1 and I4 disposed away from the vertical straight line V are relatively dark.

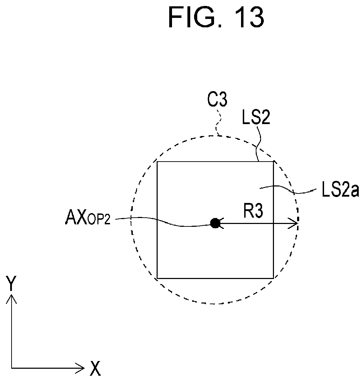

Note that, as illustrated in FIG. 6, when the light source LS2 (optical axis AX_{LS2}) is disposed in coincident relation with the optical axis AX_{OP2} of the projection lens OP2 corresponding to the light source LS2, the light source LS2 (light emitting surface LS2a) and the image circle C1 of the projection lens OP2 have a relationship illustrated in FIG. 13 therebetween.

FIG. 13 illustrates a relationship between the light source LS2 (light emitting surface LS2a) and an image circle C3 of the projection lens OP2 when the light source LS2 (optical axis AX_{LS2}) is disposed in coincident relation with the optical axis AX_{OP2} of the projection lens OP2 corresponding to the light source LS2.

When the light source LS2 (optical axis AX_{LS2}) is disposed in coincident relation with the optical axis AX_{OP2} of the projection lens OP2 corresponding to the light source LS2, as illustrated in FIG. 13, the projection lens OP2 is designed such that the image circle C3 thereof is in the form of a circle having a minimum radius R3 and encircling the light source LS2 (light emitting surface LS2a).

Preferably, the image circle C3 of the projection lens OP2 is in the form of the circle having the minimum radius R3 and encircling the light source LS2 (light emitting surface LS2a). The reason for this is as follows.

Specifically, when the radius of the image circle C3 is increased, it is difficult to reduce the F-number of the projection lens OP2. Conversely, when the radius of the image circle C3 is set smaller than the minimum radius R3, the resolution of the light source image I2 corresponding to the portion of the light source LS2 (light emitting surface LS2a) protruding from the image circle C3 of the projection lens OP2 deteriorates.

Accordingly, in terms of reducing the F-number of the projection lens OP2 and preventing the deterioration of the resolution of the light source image 12, the image circle C3 of the projection lens OP2 is preferably in the form of the circle having the minimum radius R3 and encircling the light source LS2 (light emitting surface LS2a).

Note that the minimum radius R3 need not be a minimum radius in a strict sense as long as the minimum radius R3 is a substantially minimum radius.

The projection lens OP2 is designed so as to maximize an angle at which light from the light source LS2 is captured, i.e., minimize the F-number.

The design can be performed using, e.g., predetermined simulation software.

For example, the light source image I2 enlargedly projected by the projection lens OP2 having the configuration described above is disposed in the vicinity of the vertical straight line V, as illustrated in FIG. 7.

When the projection lens OP2 is designed as described above, as illustrated in FIG. 13, the image circle C3 of the projection lens OP2 is smaller than the image circles (see FIGS. 11A and 11B) of the other projection lenses OP1, OP3, and OP4. In addition, the capture angle of the projection lens OP2 is larger than the capture angles of the projection lenses OP1, OP3, and OP4. In other words, the F-number of the projection lens OP2 is smaller than the F-numbers of the projection lenses OP1, OP3, and OP4.

As a result, the light source image I2 enlargedly projected by the projection lens OP2 is brighter than the light source images I1, I3, and I4 enlargedly projected by the other projection lenses OP1, OP3, and OP4.

Consequently, as illustrated in FIG. 7, it is possible to form the ADB light distribution pattern P having excellent long distance visibility in which the light source image I2 disposed in the vicinity of the vertical straight line V is relatively bright.

As described above, according to Second Embodiment, it is possible to provide the vehicular lamp fitting 10A which can optimize the brightness and resolution of each of the enlargedly projected light source images I1 to 14.

This is because the plurality of projection lenses OP1 to OP4 corresponding to the plurality of light sources LS1 to LS4 are provided, the image circle C1 of the projection lens OP2 (or projection lens OP3) is smaller than the image circle C2 of the projection lens OP1 (or projection lens OP4), and the F-number of the projection lens OP2 (or projection lens OP3) is smaller than the F-number of the projection lens OP1 (or projection lens OP4).

### Third Embodiment

Next, a description will be given of a vehicular lamp fitting 10B according to Third Embodiment.

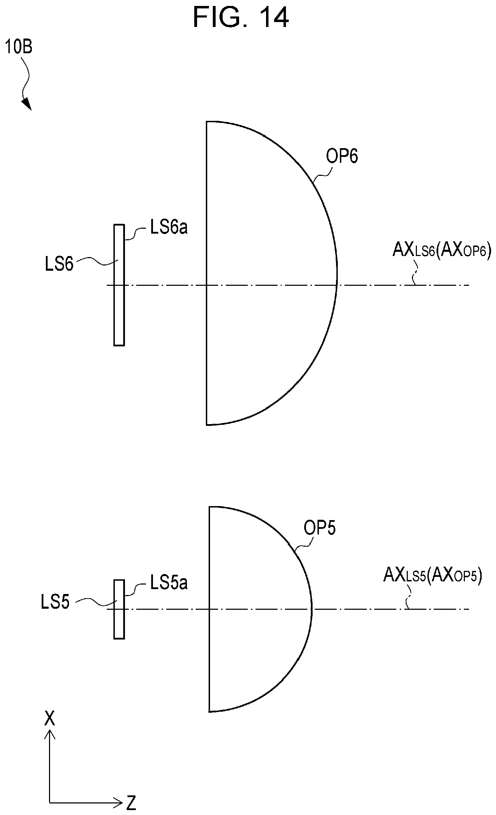

FIG. 14 is a horizontal sectional view of the vehicular lamp fitting 10B according to Third Embodiment.

As illustrated in FIG. 14, the vehicular lamp fitting 10B according to Third Embodiment includes light sources LS5 and LS6 and projection lenses OP5 and OP6 corresponding to the light sources LS5 and LS6.

Similarly to each of the light sources LS1 and LS4, the light source LS5 is a matrix light source including a plurality of semiconductor light emitting elements (e.g., a total of 1024 LED chips (pixels) arranged in 32 columns and 32 rows) arranged in a matrix configuration in a rectangular region (e.g., about 4 mm square).

The light source LS6 is a light source configured by, e.g., arranging a plurality of (e.g., three) light sources in each of which one semiconductor light emitting element (e.g., LED chip) is disposed in a rectangular region (e.g., about 4 mm square) into adjacent relation in the horizontal direction (X-axis direction).

Next, a description will be given of an image circle C4 and the F-number of the projection lens OP5.

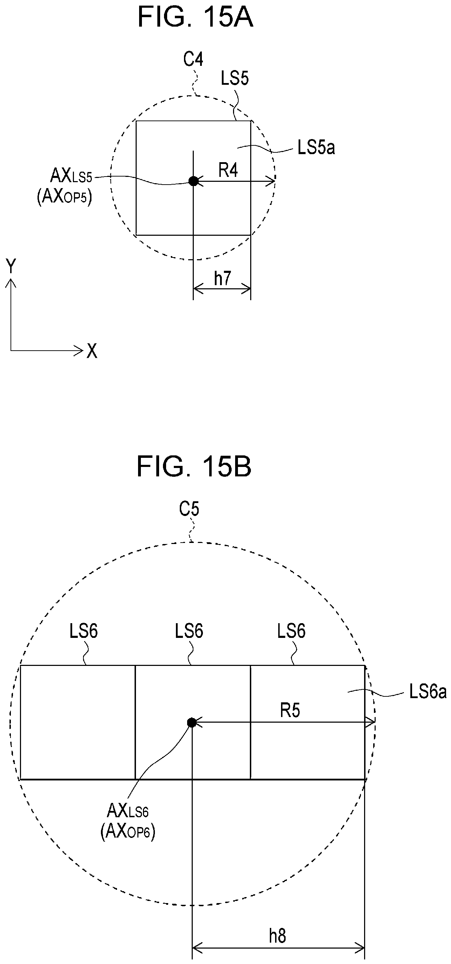

FIG. 15A illustrates a relationship between the light source LS5 (light emitting surface LS5a) and the image circle C4 of the projection lens OP5.

As illustrated in FIG. 15A, the light source LS5 (an example of the first light source of the present invention) is disposed such that a side of the light source LS5 and an optical axis AX_{OP5} of the projection lens OP5 (an example of the first projection optical system of the present invention) are spaced apart at a first distance h7. The projection lens OP5 is designed such that the image circle C4 thereof is in the form of a circle having a minimum radius R4 and encircling the light source LS5 (light emitting surface LS5a).

Preferably, the image circle C4 of the projection lens OP5 is in the form of the circle having the minimum radius R4 and encircling the light source LS5 (light emitting surface LS5a). The reason for this is as follows.

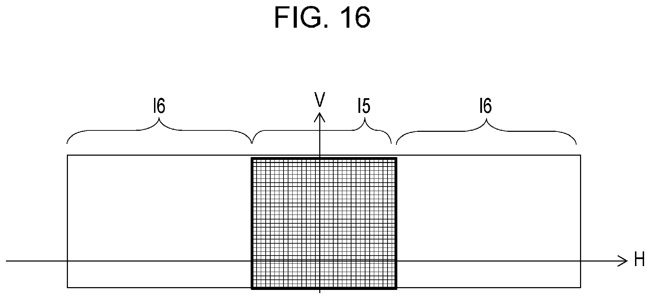

Specifically, when the radius of the image circle C4 is increased, it is difficult to reduce the F-number of the projection lens OP5. Conversely, when the radius of the image circle C4 is set smaller than the minimum radius R4, the resolution of a light source image I5 (see FIG. 16) corresponding to the portion of the light source LS5 (light emitting surface LS5a) protruding from the image circle C4 of the projection lens OP5 deteriorates.

Accordingly, in terms of reducing the F-number of the projection lens OP5 and preventing the deterioration of the resolution of the light source image I5, the image circle C4 of the projection lens OP5 is preferably in the form of the circle having the minimum radius R4 and encircling the light source LS5 (light emitting surface LS5a).

Note that the minimum radius R4 need not be a minimum radius in a strict sense as long as the minimum radius R4 is a substantially minimum radius.

The projection lens OP5 is designed so as to maximize an angle at which light from the light source LS5 is captured, i.e., minimize the F-number.

The design can be performed using, e.g., predetermined simulation software.

For example, the light source image I5 enlargedly projected by the projection lens OP5 having the configuration described above is disposed in the vicinity of the vertical straight line V, as illustrated in FIG. 16.

Next, a description will be given of an image circle C5 and the F-number of the projection lens OP6.

FIG. 15B illustrates a relationship between the light source LS6 (light emitting surface LS6a) and the image circle C5 of the projection lens OP6.

As illustrated in FIG. 15B, the light source LS6 (an example of the second light source of the present invention) is disposed such that a side of the light source LS6 and an optical axis AX_{OP6} of the projection lens OP6 (an example of the second projection optical system of the present invention) are spaced apart at a second distance h8 (h8 > h7). The projection lens OP6 is designed such that the image circle C5 thereof is in the form of a circle having a minimum radius R5 and encircling the light source LS6 (light emitting surface LS6a).

The image circle C5 of the projection lens OP6 is preferably in the form of the circle having the minimum radius R5 and encircling the light source LS6 (light emitting surface LS6a). The reason for this is as follows.

Specifically, when the radius of the image circle C5 is increased, it is difficult to reduce the F-number of the projection lens OP6. Conversely, when the radius of the image circle C5 is set smaller than the minimum radius R5, the resolution of a light source image I6 (see FIG. 16) corresponding to the portion of the light source LS6 (light emitting surface LS6a) protruding from the image circle C5 of the projection lens OP6 deteriorates.

Accordingly, in terms of reducing the F-number of the projection lens OP6 and preventing the deterioration of the resolution of the light source image 16, the image circle C5 of the projection lens OP6 is preferably in the form of the circle having the minimum radius R5 and encircling the light source LS6 (light emitting surface LS6a).

Note that the minimum radius R5 need not be a minimum radius in a strict sense as long as the minimum radius R5 is a substantially minimum radius.

The projection lens OP6 is designed so as to maximize an angle at which light from the light source LS6 is captured, i.e., minimize the F-number.

The design can be performed using, e.g., predetermined simulation software.

For example, the light source image I6 enlargedly projected by the projection lens OP6 having the configuration described above is disposed as illustrated in FIG. 16.

When the projection lenses OP5 and OP6 are designed as described above, as illustrated in FIGS. 15A and 15B, the image circle C4 of the projection lens OP5 is smaller than the image circle C5 of the projection lens OP6. In addition, the capture angle of the projection lens OP5 is larger than the capture angle of the projection lens OP6. In other words, the F-number of the projection lens OP5 is smaller than the F-number of the projection lens OP6.

As a result, the light source image I5 enlargedly projected by the projection lens OP5 is brighter than the light source image I6 enlargedly projected by the projection lens OP6.

Consequently, as illustrated in FIG. 16, it is possible to form the ADB light distribution pattern P having excellent long distance visibility in which the light source image I5 disposed in the vicinity of the vertical straight line V is relatively bright. FIG. 16 illustrates an example of the ADB light distribution pattern P (light source image) formed by the vehicular lamp fitting 10B according to Third Embodiment.

As described above, according to Third Embodiment, it is possible to provide the vehicular lamp fitting 10B which can optimize the brightness and resolution of each of the enlargedly projected light source images I5 and 16.

This is because the plurality of projection lenses OP5 and OP6 corresponding to the plurality of light sources LS5 and LS6 are provided, the image circle C4 of the projection lens OP5 is smaller than the image circle C5 of the projection lens OP6, and the F-number of the projection lens OP5 is smaller than the F-number of the projection lens OP6.

### Fourth Embodiment

Next, a description will be given of processing for preventing an uneven light distribution as Fourth Embodiment of the present invention.

First, a description will be given of the ADB light distribution pattern P in Fourth Embodiment. The ADB light distribution pattern P is an example of the predetermined light distribution pattern of the present invention.

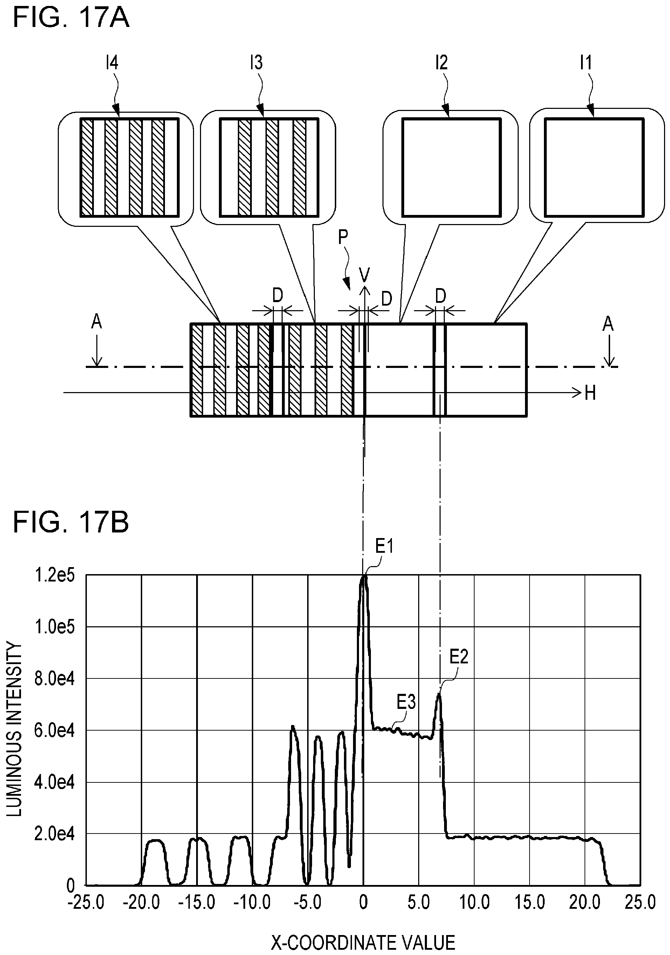

FIG. 17A illustrates an example of the ADB light distribution pattern P formed on a virtual vertical screen (e.g., disposed about 25 m ahead of the front surface of the vehicle) directly facing the front surface of the vehicle.

As illustrated in FIG. 17A, the ADB light distribution Pattern P includes the four light source images I1 to I4 (respective light source images I1 to I4 illustrated in four balloons) arranged in the horizontal direction. When the light source images I1 to I4 are not particularly distinguished from each other, the light source images I1 to I4 are hereinafter referred to as the light source images I. Note that, in FIG. 17A, blank rectangles represent lighted regions, while solid rectangles represent unlighted regions.

As described in First Embodiment, the light source images I are disposed on the virtual vertical screen to be horizontally arranged in a state where the light source images I (pixel groups) adjacent to each other partially overlap each other by performing enlarged projection of the light source images I1 to I4 of the light sources LS1 to LS4 using the projection lenses OP1 to OP4. A reference mark D in FIG. 17A represents an overlap region where the light source images (pixel groups) I adjacent to each other partially overlap each other, which is hereinafter referred to as the overlap region D.

Preferably, the light source images I overlap each other such that the respective pixel groups thereof are not offset from each other, but the light source images I may also overlap each other in a state where the respective pixel groups thereof are offset from each other.

The present inventors have found that, when the individual light source images I are caused to overlap each other as described above, the following problem occurs.

FIG. 17B is a graph representing a luminous intensity distribution in a horizontal cross section along a line A-A in FIG. 17A.

For example, when a luminous intensity of the entire region of the light source image I2 is substantially constant and a luminous intensity of the entire region of the light source image I3 is substantially constant, as illustrated in FIG. 17B, a luminous intensity of the ADB light distribution pattern P inside the overlap region D (see portions denoted by reference numerals E1 and E2 in FIG. 17B) is higher than a luminous intensity of the ADB light distribution pattern P outside the overlap region D (see a portion denoted by a reference numeral E3 in FIG. 17B). This results in an uneven light distribution and causes a problem in that the uneven light distribution gives a feeling of strangeness to a driver or the like.

The control unit 21 individually controls the turning ON/OFF of each of the light sources LS (semiconductor light emitting element groups) such that the uneven light distribution, i.e., a brightness difference between the ADB light distribution pattern P inside the overlap region D and the ADB light distribution pattern P outside the overlap region D is inconspicuous. Specifically, the turning ON/OFF control is performed as follows.

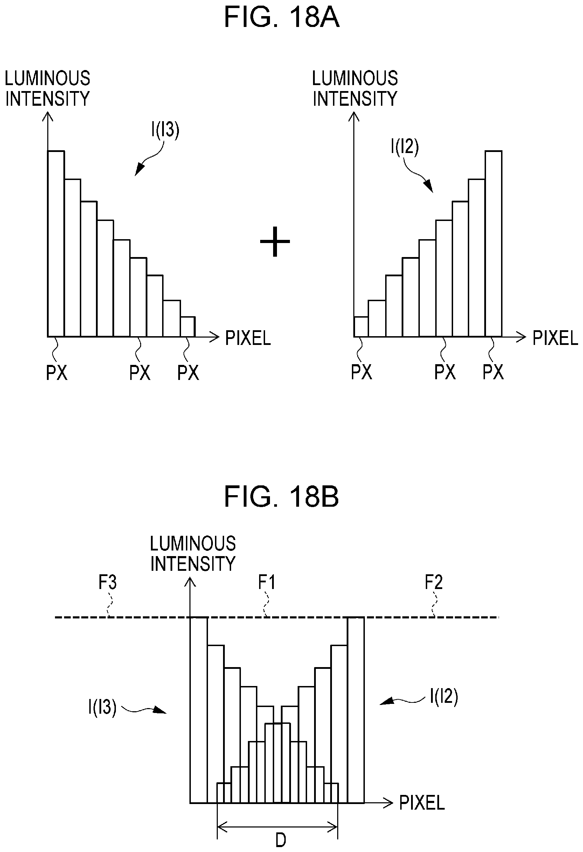

FIGS. 18A and 18B illustrate an example of the turning ON/OFF control of the light sources LS (semiconductor light emitting element groups). Individual rectangles in FIGS. 18A and 18B represent the pixels PX inside the overlap region D which are extracted from the light source images I adjacent to each other (e.g., the light source images I2 and I3 in FIG. 17A). A vertical length of each of the rectangles represents the luminous intensity of each of the pixels PX.

For example, as illustrated in FIG. 18A, the control unit 21 performs individual turning ON/OFF control (dimming) of each of the light sources LS (semiconductor light emitting element groups) such that each of the luminous intensity of one of the light source images I (pixel groups) inside the overlap region D and another of the light source images I (pixel groups) inside the overlap region D gradationally decreases.

When the light source images I (pixel groups) inside the overlap region D having the respective luminous intensities thus adjusted are caused to overlap each other as illustrated in FIG. 18B, the respective luminous intensities of the individual pixels inside the overlap region D are added up. Consequently, the luminous intensity of the ADB light distribution pattern P inside the overlap region D is substantially equal to the luminous intensity of the ADB light distribution pattern P outside the overlap region D. A dotted line denoted by a reference numeral F1 in FIG. 18B represents the luminous intensity (total luminous intensity) of the ADB light distribution pattern P inside the overlap region D, while each of dotted lines denoted by reference numerals F2 and F3 represents the luminous intensity of the ADB light distribution pattern P outside the overlap region D.

As a result, the bright difference between the ADB light distribution pattern P inside the overlap region D and the ADB light distribution pattern P outside the overlap region D is inconspicuous. In other words, it is possible to prevent the uneven light distribution.

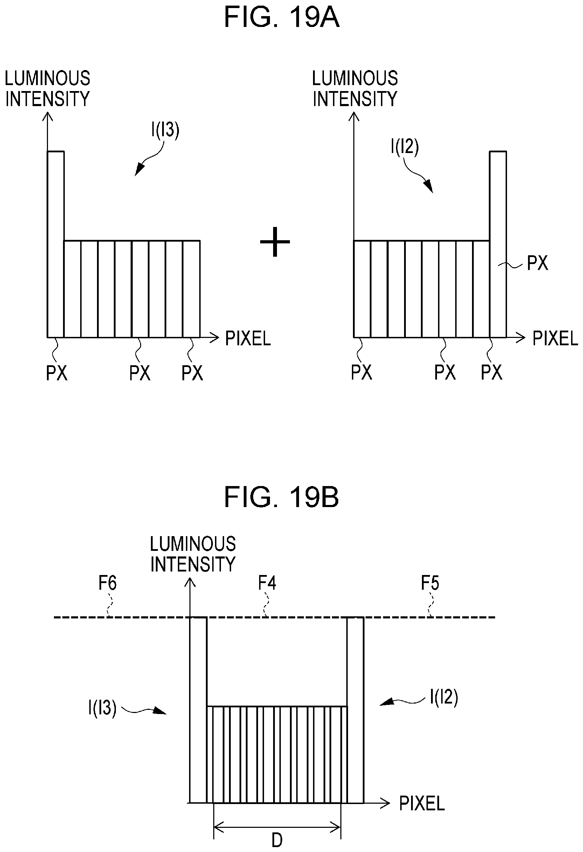

FIGS. 19A and 19B illustrate another example of the turning ON/OFF control of the light sources LS (semiconductor light emitting element groups). Individual rectangles in FIGS. 19A and 19B represent the pixels PX inside the overlap region D which are extracted from the light source images I (e.g., the light source images I2 and I3 in FIG. 17A) adjacent to each other. The vertical length of each of the rectangles represents the luminous intensity of each of the pixels PX.

For example, as illustrated in FIG. 19A, the control unit 21 may also perform individual turning ON/OFF control (dimming) of each of the light sources LS (semiconductor light emitting element groups) so as to decrease the luminous intensity of one of the light source images I (pixel groups) inside the overlap region D and the luminous intensity of another of the light source images I (pixel groups) inside the overlap region D.

When the light source images I (pixel groups) inside the overlap region D having the respective luminous intensities thus adjusted are caused to overlap each other as illustrated in FIG. 19B, the respective luminous intensities of the individual pixels inside the overlap region D are added up. Consequently, the luminous intensity of the ADB light distribution pattern P inside the overlap region D is substantially equal to the luminous intensity of the ADB light distribution pattern P outside the overlap region D. A dotted line denoted by a reference numeral F4 in FIG. 19B represents the luminous intensity (total luminous intensity) of the ADB light distribution pattern P inside the overlap region D, while each of dotted lines denoted by reference numerals F5 and F6 represents the luminous intensity of the ADB light distribution pattern P outside the overlap region D.

As a result, the brightness difference between the ADB light distribution pattern P inside the overlap region D and the ADB light distribution pattern P outside the overlap region D is inconspicuous. In other words, it is possible to prevent the uneven light distribution.

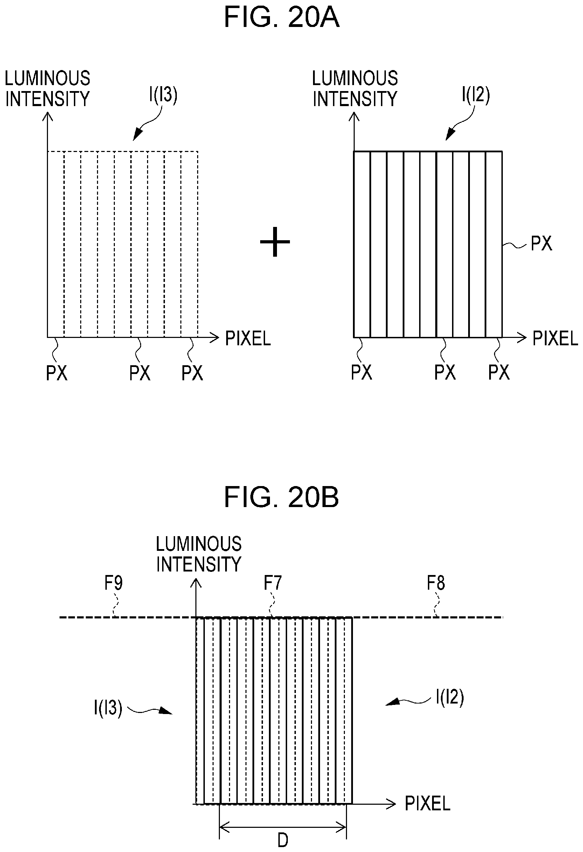

FIGS. 20A and 20B illustrate still another example of the turning ON/OFF control of the light sources LS (semiconductor light emitting element groups). Individual rectangles in FIGS. 20A and 20B represent the pixels PX inside the overlap region D which are extracted from the light source images I (e.g., the light source images I2 and I3 in FIG. 17A) adjacent to each other. The vertical length of each of the rectangles represents the luminous intensity of each of the pixels PX.

For example, as illustrated in FIG. 20A, the control unit 21 may also perform individual turning ON/OFF control (dimming) of each of the light sources LS (semiconductor light emitting element groups) so as to turn ON one of the light source images I (pixel groups) inside the overlap region D and turn OFF the another of the light source images I (pixel groups) inside the overlap region D. In FIG. 20A, a right side (solid lines) represents the light source image I (pixel group) in an ON state, while a left side (dotted lines) represents the light source image I (pixel group) in an OFF state.

When the light source images I (pixel groups) inside the overlap region D having the respective luminous intensities thus adjusted are caused to overlap each other as illustrated in FIG. 20B, the respective luminous intensities of the individual pixels inside the overlap region D are added up. Consequently, the luminous intensity of the ADB light distribution pattern P inside the overlap region D is substantially equal to the luminous intensity of the ADB light distribution pattern P outside the overlap region D. A dotted line denoted by a reference numeral F7 in FIG. 20B represents the luminous intensity (total luminous intensity) of the ADB light distribution pattern P inside the overlap region D, while each of dotted lines denoted by reference numerals F8 and F9 represents the luminous intensity of the ADB light distribution pattern P outside the overlap region D.

As a result, the brightness difference between the ADB light distribution pattern P inside the overlap region D and the ADB light distribution pattern P outside the overlap region D is inconspicuous. In other words, it is possible to prevent the uneven light distribution.

As a result of performing simulation, the present inventors have recognized that, as the number of the pixels inside the overlap region D is larger, the light source images I are more smoothly connected to each other.

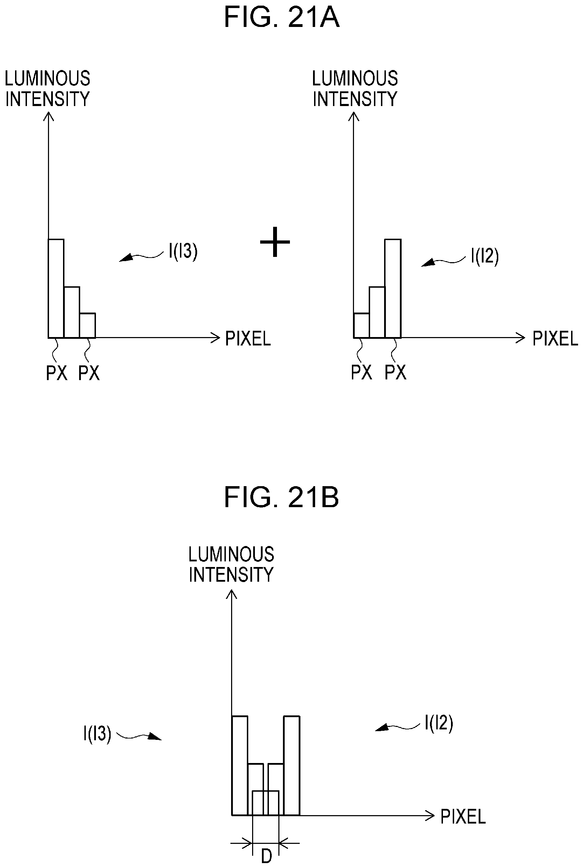

FIGS. 21A and 21B illustrate yet another example of the turning ON/OFF control of the light sources LS (semiconductor light emitting element groups).

For example, the followings are found: in a case where the number of the pixels inside the overlap region D is small as illustrated in FIG. 21A, when the light source images I are caused to overlap each other in a state where the respective pixel groups thereof are offset from each other as illustrated in FIG. 21B, sparseness (light distribution unevenness) is conspicuous. By contrast, in a case where the number of the pixels inside the overlap region D is large as illustrated in FIG. 18A, even when the light source images I are caused to overlap each other in a state where the respective pixel groups thereof are offset from each other as illustrated in FIG. 18B, sparseness (light distribution unevenness) is inconspicuous, the light source images I appear to be smoothly connected to each other, and a satisfactory result is obtained.

Accordingly, it is preferable that the number of the pixels inside the overlap region D is larger.

As described above, according to Fourth Embodiment, it is possible to provide a vehicular lamp fitting which can prevent an uneven light distribution.

This is because the vehicular lamp fitting includes the control unit 21 which performs individual turning ON/OFF control of each of the light sources LS (semiconductor light emitting element groups), and the control unit 21 performs the individual turning ON/OFF control of each of the light sources LS (semiconductor light emitting element groups) such that the brightness difference between the ADB light distribution pattern P inside the overlap region D and the ADB light distribution pattern P outside the overlap region D is inconspicuous (see, e.g., FIGS. 18A to 18C to FIGS. 20A and 20B).

### Fifth Embodiment

Next, a description will be given of a control system 20A which performs, when the light source LS (semiconductor light emitting elements) corresponding to one of the light source images I (pixel groups) inside the overlap region D fails, a complementary process of complementing the failed light source LS (semiconductor light emitting elements).

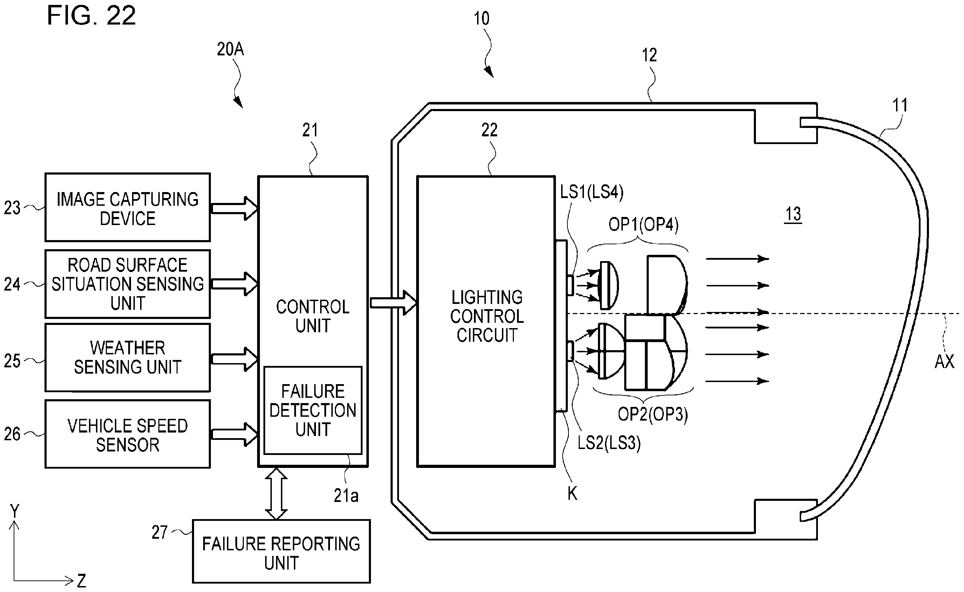

FIG. 22 is a schematic configuration diagram of the control system 20A that performs the complementary process, which corresponds to FIG. 1 to which a failure detection unit 21a and a failure reporting unit 27 are added. The failure detection unit 21a is an example of failure detection means of the present invention.

The failure detection unit 21a detects the failed semiconductor light emitting element in the light sources LS (semiconductor light emitting element groups). For example, the failure detection unit 21a determines whether or not a voltage applied to each of the semiconductor light emitting elements included in the light sources LS (semiconductor light emitting element groups) has exceeded a threshold, and detects a failure of the semiconductor light emitting element when determining that the threshold is exceeded (when, e.g., a specified semiconductor light emitting element is short-circuited). The failure detection unit 21a is implemented by, e.g., the CPU of the control unit 21 by executing, e.g., a predetermined program read from the ROM into the RAM or the like. The failure detection unit 21a may also be provided in the lighting control circuit 22.

The failure reporting unit 27 is means for reporting a failure in the light sources LS (semiconductor light emitting element groups). For example, the failure reporting unit 27 is a display displaying occurrence of a failure in the light sources LS (semiconductor light emitting element groups) or a speaker which outputs a sound or voice indicating the occurrence of the failure in the light sources LS.

Next, a description will be given of an example of an operation (complementary process which complements the failed light source LS (semiconductor light emitting elements)) of the control system 20A.

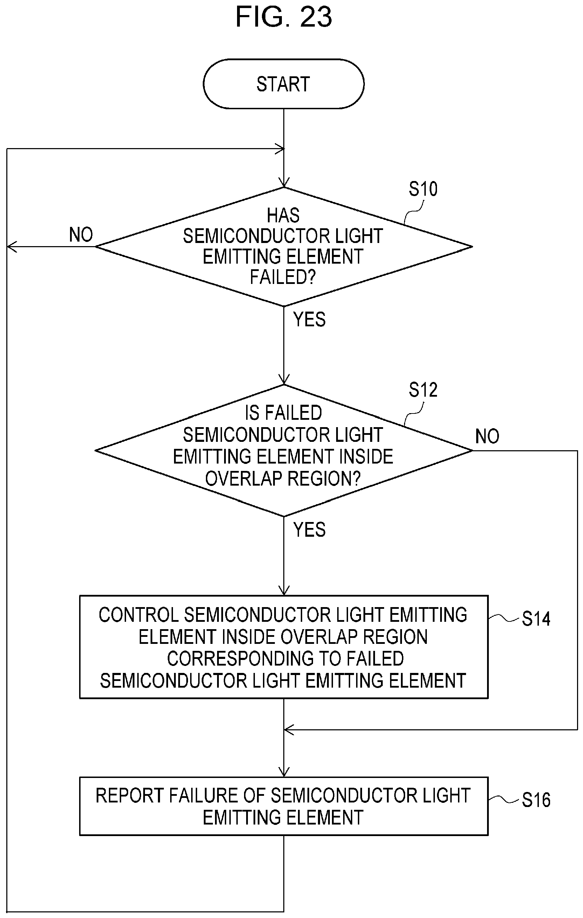

FIG. 23 is a flow chart for illustrating an example of the operation (complementary process which complements the failed light source LS (semiconductor light emitting elements)) of the control system 20A.

The process illustrated in FIG. 23 is started when, e.g., the driver turns ON a switch (not shown) for turning ON the light sources LS and is ended when the driver turns OFF the switch.

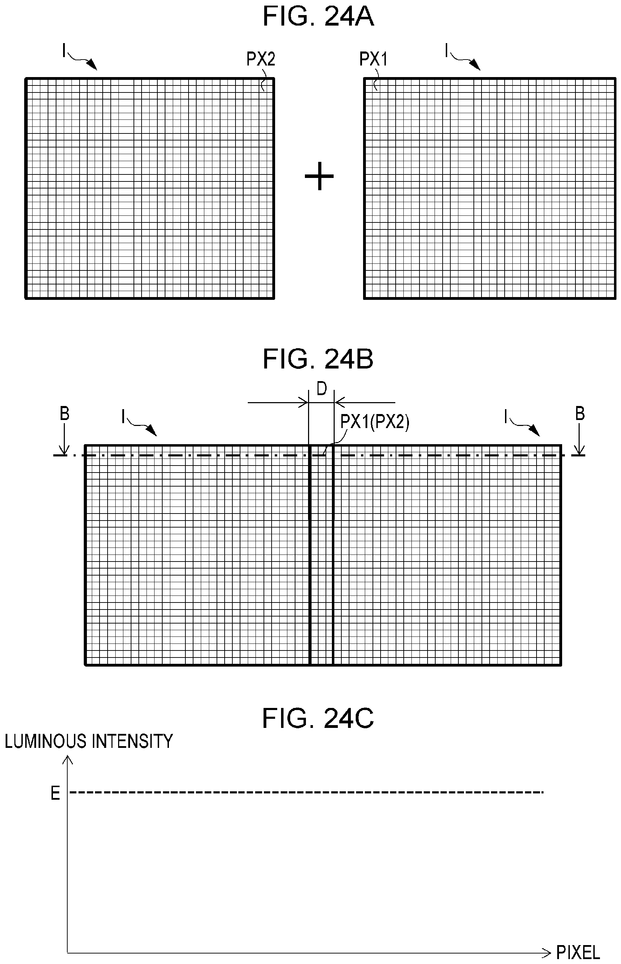

FIGS. 24A to 24C illustrate another example of the turning ON/OFF control of the light sources LS (semiconductor light emitting element groups).

By way of example, the following will describe a case where, as illustrated in FIG. 24A, a pixel PX1 included in one of the light source images I and a pixel PX2 included in another of the light source images I are disposed in overlapping relation, as illustrated in FIG. 24B. It is assumed that, in FIG. 24B, the control unit 21 performs individual turning ON/OFF control of each of the light sources LS (semiconductor light emitting element groups) such that a luminous intensity in a horizontal cross section along a line B-B passing through the pixels PX1 and PX2 has a substantially constant value E, as illustrated in FIG. 24C.

When the light sources LS are turned ON, the failure detection unit 21a determines whether or not any of the semiconductor light emitting elements in the light sources LS (semiconductor light emitting element groups) has failed (Step S10).

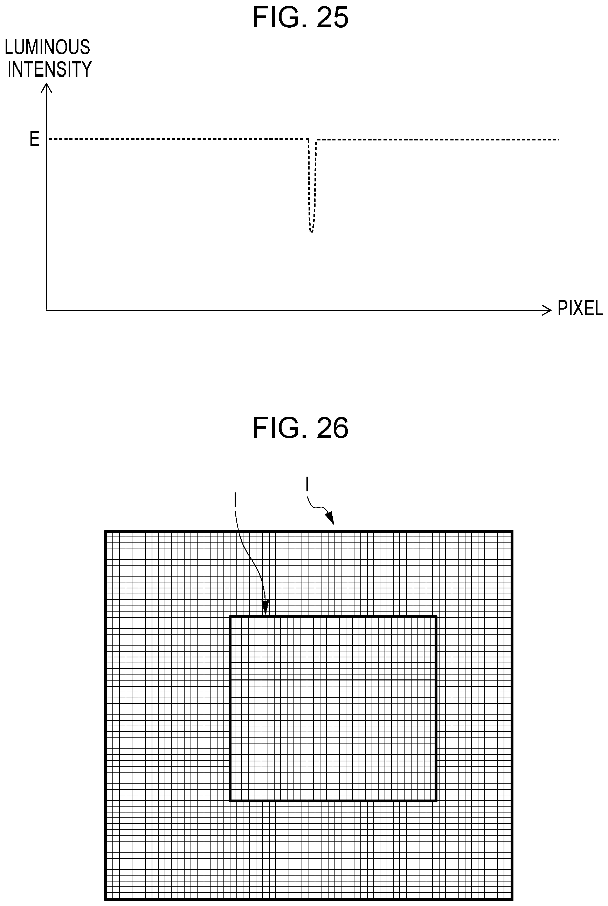

It is assumed herein that the semiconductor light emitting element corresponding to the pixel PX1 illustrated in FIG. 24A has failed and the luminous intensity of a portion of the ADB light distribution pattern P corresponding to the pixel PX1 has deteriorated, as illustrated in FIG. 25. FIG. 25 is a graph illustrating a luminous intensity distribution in the ADB light distribution pattern P in which the luminous intensity of the portion corresponding to the pixel PX1 has deteriorated.

In this case, the failure detection unit 21a determines that the semiconductor light emitting element corresponding to the pixel PX1 illustrated in FIG. 24A has failed (Yes in Step S10).

Next, the control unit 21 determines whether or not the semiconductor light emitting element determined to have failed in Step S10 is inside the overlap region D (Step S12).

Since the semiconductor light emitting element corresponding to the pixel PX1 is inside the overlap region D, the control unit 21 determines herein that the semiconductor light emitting element determined to have failed in Step S10 is inside the overlap region D (Yes in Step S12).

Next, the control unit 21 performs turning ON/OFF control (dimming) of the semiconductor light emitting element (semiconductor light emitting element corresponding to the pixel PX2) inside the overlap region D corresponding to the semiconductor light emitting element (semiconductor light emitting element corresponding to the pixel PX1) determined to have failed in Step S10 (Step S14).

Specifically, the control unit 21 performs the turning ON/OFF control of the semiconductor light emitting element corresponding to the pixel PX2 so as to increase the luminous intensity of the pixel PX2. More specifically, the control unit 21 performs the turning ON/OFF control of the semiconductor light emitting element corresponding to the pixel PX2 such that the luminous intensity of the portion of the ADB light distribution pattern P corresponding to the pixel PX2 is substantially equal to an ambient luminous intensity (i.e., the luminous intensity of the pixel PX1 is complemented), as illustrated in FIG. 24C.

Next, the control unit 21 controls the failure reporting unit 27 to report the failure in the light sources LS (semiconductor light emitting element groups) (Step S16).

Steps S10 to S16 described above are repeatedly performed until the switch for turning ON the light sources LS is turned OFF.

According to Fifth Embodiment, when one of the light sources LS (e.g., the semiconductor light emitting element corresponding to the pixel PX1 in FIG. 24A) inside the overlap region D fails, it is possible to complement the luminous intensity of the pixel portion of the ADB light distribution pattern P corresponding to the failed semiconductor light emitting element by controlling another of the light sources LS (e.g., the semiconductor light emitting element corresponding to the pixel PX2 in FIG. 24A) inside the overlap region D. As a result, it is possible to prevent a dark portion from being formed in the pixel portion (e.g., the pixel PX1 portion in FIG. 24B) corresponding to the failed semiconductor light emitting element in the ADB light distribution pattern P.

Next, a description will be given of a modification.

In Fifth Embodiment, the description has been given of the example (see, e.g., FIG. 17A) in which the light source images I are horizontally arranged in a state where a portion of one of the light source images I (e.g., pixel group in the light source image 12) and a portion of another of the light source images (e.g., pixel group in the light source image 13) overlap each other. However, the arrangement of the light source images I is not limited thereto.

FIG. 26 is a view illustrating the modification of the arrangement of the light source images I.

For example, as illustrated in FIG. 26, the light source images I may also be arranged in a state where the entire region of one of the light source images I (pixel groups) and at least a portion of the other of the light source images I (pixel groups) overlap each other.

The present modification can also achieve the effects as achieved by the embodiment described above.

### Sixth Embodiment

Next, a description will be given of a vehicular lamp fitting 10C according to Sixth Embodiment.

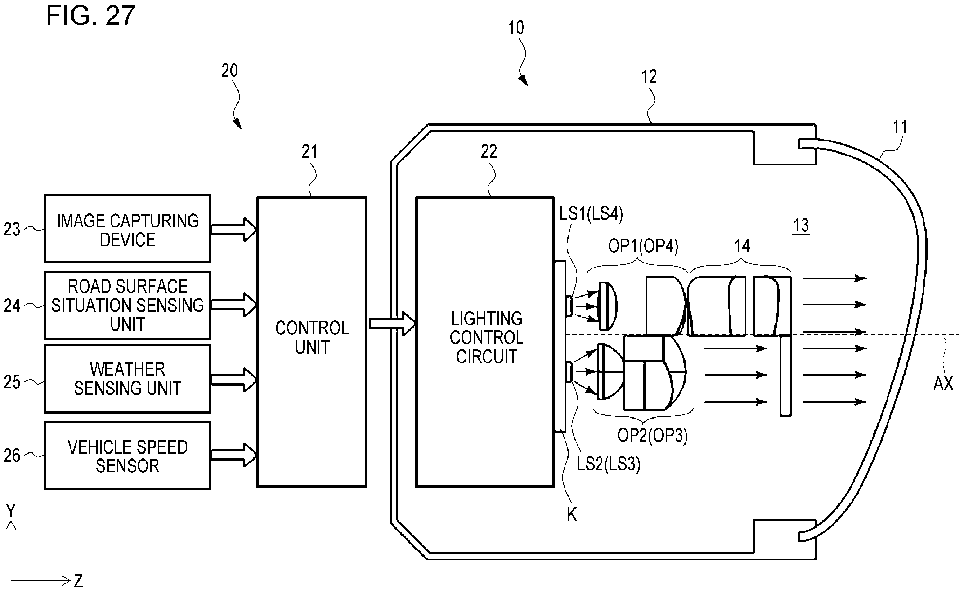

FIG. 27 is a schematic configuration diagram of the vehicular lamp fitting 10C according to Sixth Embodiment.

As illustrated in FIG. 27, the vehicular lamp fitting 10C according to Sixth Embodiment corresponds to the vehicular lamp fitting 10 (see FIG. 1) according to First Embodiment to which a magnification varying lens 14 is added.

First, a description will be given of the ADB light distribution pattern P in Sixth Embodiment. The ADB light distribution pattern P is an example of the predetermined light distribution pattern of the present invention.

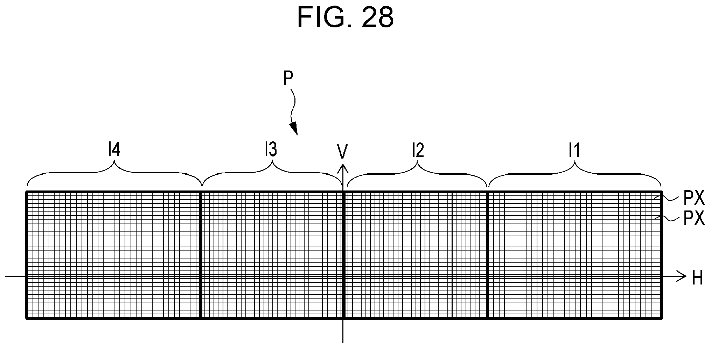

FIG. 28 illustrates an example of the ADB light distribution pattern P formed on a virtual vertical screen (e.g., disposed about 25 m ahead of the front surface of the vehicle) directly facing the front surface of the vehicle.

As illustrated in FIG. 28, the ADB light distribution pattern P includes the four light source images I1 to I4 arranged in the horizontal direction. When the light source images I1 to I4 are not particularly distinguished from each other, the light source images I1 to I4 are hereinafter referred to as the light source images I.

As described in First Embodiment, the light source images I include the plurality of pixels PX which are individually turned ON/OFF (or dimmed) in response to the turning ON/OFF control of the light sources LS (plurality of semiconductor light emitting elements). The light source images I are enlargedly projected by the projection lenses OP to be disposed on the virtual vertical screen in gaplessly adjacent relation in the horizontal direction (X-axis direction).

At that time, the light source images I2 and I3 are disposed in a horizontal center portion of the ADB light distribution pattern P. Meanwhile, horizontal magnifications of the light source images I1 and I4 are higher than those of the light source images I2 and I3 and disposed in horizontal peripheral portions (both end portions) of the ADB light distribution pattern P. For example, the horizontal center portion of the ADB light distribution pattern P is in a range inward of ±10° of the horizontal line H (10° to the right and 10° to the left). For example, the horizontal peripheral portions of the ADB light distribution pattern P are in a range outward of ±10° of the horizontal line H. The peripheral portions of the ADB light distribution pattern P may have portions falling within the range inward of ±10° of the center of the horizontal line H.

Next, a description will be given of the magnification varying lens 14.

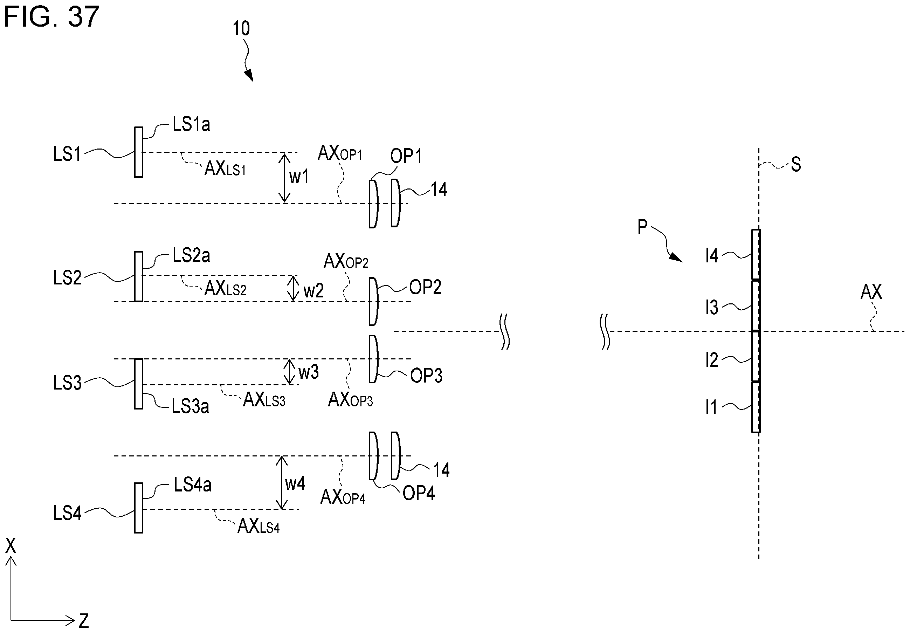

FIG. 37 is obtained by adding the magnification varying lens 14 to FIG. 3.

As illustrated in FIG. 37, the magnification varying lens 14 is disposed, e.g., in front of the projection lenses OP1 and OP4.

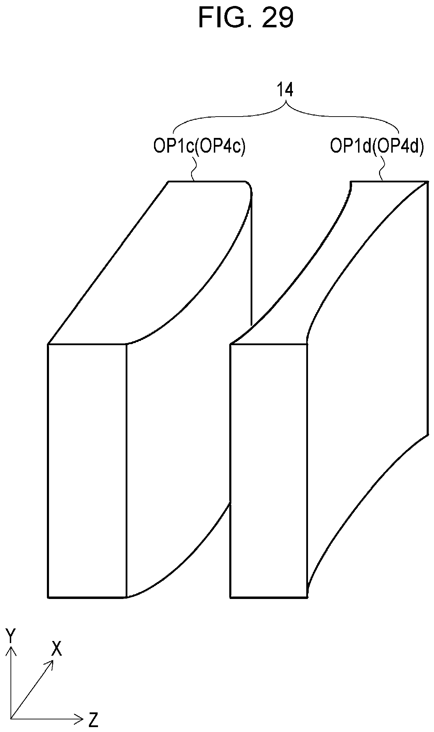

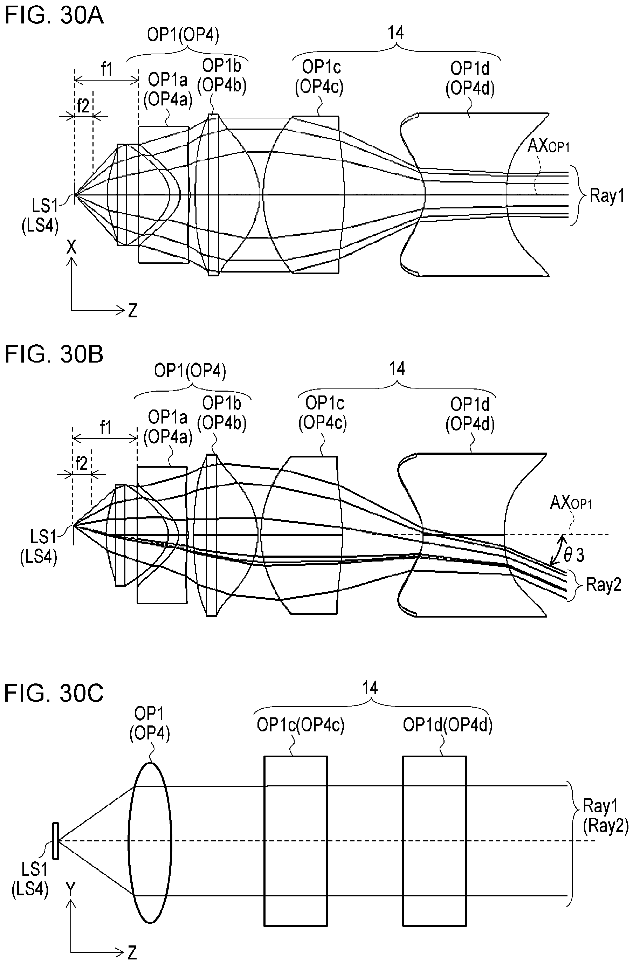

FIG. 29 illustrates an example (schematic perspective view) of the magnification varying lens 14. FIGS. 30A and 30B are transverse sectional views of the magnification varying lens 14. FIG. 30C is a vertical sectional view (schematic diagram) of the magnification varying lens 14.

The magnification varying lens 14 is a lens which increases the horizontal magnifications of the light source images I of the light sources LS and is also referred to as an anamorphic lens. The magnification varying lens 14 is an example of a magnification varying optical system of the present invention.

As illustrated in FIGS. 29 and 30A, the magnification varying lens 14 includes a plurality of cylindrical lenses. For example, the magnification varying lens 14 includes a combination of two cylindrical lenses OP1c and OP1d. Note that the magnification varying lens 14 may also include one cylindrical lens.

The first cylindrical lens OP1c is a cylindrical lens having a positive power in a horizontal cross section. The second cylindrical lens OP1d is a cylindrical lens having a negative power in the horizontal cross section.

Next, a description will be given of a light path to be followed by light from the light source LS1. The same applies also to a light path to be followed by light from the light source LS4.

For convenience of description, the following will describe the light path when the optical axis AX_{LS1} of the light source LS1 coincides with the optical axis AX_{OP1} (and with the optical axis of the magnification varying lens 14) of the projection lens OP1.

For example, as illustrated in FIG. 30A, light Ray1 emitted from a center of the light emitting surface of the light source LS1 is successively refracted by the projection lens OP1, the first cylindrical lens OP1c, and the second cylindrical lens OP1d in this order to finally travel in a direction parallel with the optical axis AX_{OP1} of the projection lens OP1 toward an intersection of the horizontal line H and the vertical straight line V.

Also, for example, as illustrated in FIG. 30B, light Ray2 emitted from a position shifted leftward (leftward when facing the front side of the vehicle or upward in FIG. 30B) with respect to the center of the light emitting surface of the light source LS1 is successively refracted by the projection lens OP1, the first cylindrical lens OP1c, and the second cylindrical lens OP1d in this order to travel in a direction at an angle θ3 with respect to the optical axis AX_{OP1} of the projection lens OP1. Light emitted from another position also similarly travels in an angular direction corresponding to the position thereof.

At that time, as illustrated in FIGS. 30A and 30B, a focal length f2 of an optical system including the projection lens OP1 and the magnification varying lens 14 is shorter than a focal length f1 of the projection lens OP1 (the same applies also to the projection lens OP2) in a horizontal cross section. Accordingly, the horizontal magnification of the light source image I1 enlargedly projected by the optical system including the projection lens OP1 and the magnification varying lens 14 is higher than the horizontal magnification of the light source image I2 enlargedly projected by the projection lens OP2.

Likewise, a focal length of an optical system including the projection lens OP4 and the magnification varying lens 14 is shorter than a focal length of the projection lens OP4 (the same applies also to the projection lens OP3) in the horizontal cross section. Accordingly, the horizontal magnification of the light source image I4 enlargedly projected by the optical system including the projection lens OP4 and the magnification varying lens 14 is higher than the horizontal magnification of the light source image I3 enlargedly projected by the projection lens OP3.

As a result, the horizontally wide ADB light distribution pattern P is formed in which the horizontal magnifications of the light source images I1 and I4 disposed in the peripheral portions are higher than the horizontal magnifications of the light source images I2 and I3 disposed in the center portion (see FIG. 28).

Note that, since the magnification varying lens 14 does not have a curvature in the vertical cross section (see FIG. 30C), respective vertical magnifications of the light source images I1 to I4 are equal to each other. Note that, in FIGS. 29 and 30C, for convenience of description, the projection lens OP1 and the magnification varying lens 14 are schematically illustrated.

Next, a description will be given of a lens group included in the optical lenses OP1 to OP4 and the magnification varying lens 14.

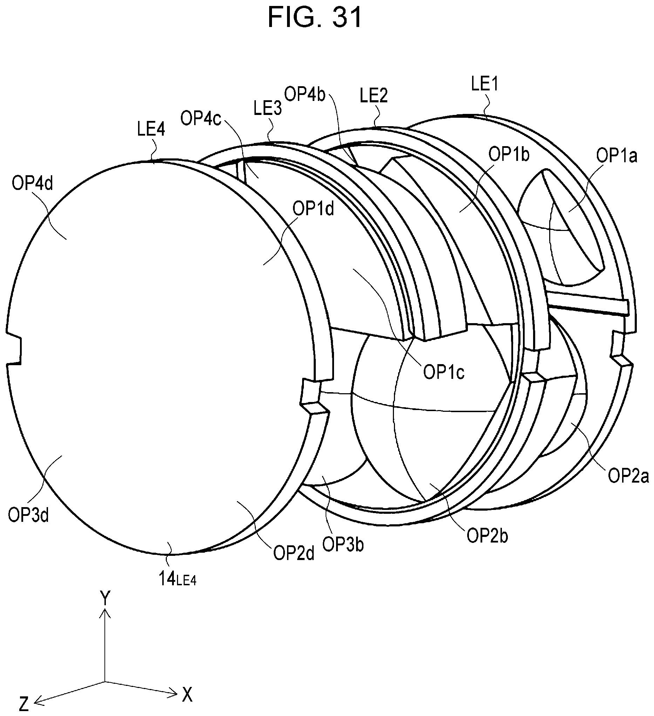

FIG. 31 is a perspective view of the lens group included in the projection lenses OP1 to OP4 and the magnification varying lens 14. The lens group includes four lens bodies, i.e., a first lens body LE1, a second lens body LE2, a third lens body LE3, and a four lens body LE4. The first lens body LE1, the second lens body LE2, the third lens body LE3, and the fourth lens body LE4 are arranged in this order in a forward direction from the light sources LS. Examples of a material of the first to fourth lens bodies LE1 to LE4 include a transparent resin such as acryl or polycarbonate. The first to fourth lens bodies LE1 to LE4 are disposed in front of the light sources LS, while being held by a holding member fixed to the heat sink, the housing, or the like, though not shown.

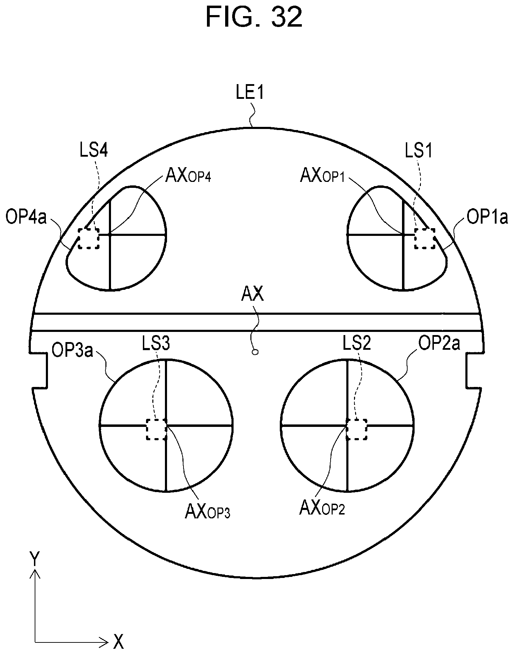

FIG. 32 is a front view (perspective view) of the first lens body LE1.

As illustrated in FIG. 32, the first lens body LE1 is a lens body having a substantially circular outer shape. The first lens body LE1 includes the lenses OP1a to OP4a which are disposed in front of the light sources LS1 to LS4.

As illustrated in FIG. 31, the second lens body LE2 is also a lens body having a substantially circular outer shape. The second lens body LE2 is disposed in front of the first lens body LE1. The second lens body LE2 includes the lens OP1b to OP4b which are disposed in front of the lenses OP1a to OP4a.

The lens OP1a and the lens OP1b (see FIG. 31) disposed in front of the lens OP1a are included in the projection lens OP1 which performs enlarged projection of the light source image I1 of the light source LS1 (see FIG. 12). Likewise, the lens OP2a and the lens OP2b disposed in front of the lens OP2a are included in the projection lens OP2 which performs enlarged projection of the light source image I2 of the light source LS2 (see FIG. 10). Likewise, the lens OP3a (not shown in FIG. 31) and the lens OP3b disposed in front of the lens OP3a are included in the projection lens OP3 which performs enlarged projection of the light source image I3 of the light source LS3 (see FIG. 10). Likewise, the lens OP4a (not shown in FIG. 31) and the lens OP4b are included in the projection lens OP4 which performs enlarged projection of the light source image I4 of the light source LS4 (see FIG. 12).

As illustrated in FIG. 31, the third lens body LE3 is a semi-circular lens body obtained by cutting off a lower half of a lens body having a substantially circular outer shape. The third lens body LE3 is disposed in front of the second lens body LE2 (lenses OP1b and OP4b). The third lens body LE3 includes the lens OP1c and a lens OP4c which are disposed in front of the lenses OP1b and OP4b.

The fourth lens body LE4 is a lens body having a substantially circular outer shape. The fourth lens body LE4 is disposed in front of the third lens body LE3. A final emitting surface 14_{LE4} of the fourth lens body LE4 is a surface parallel with, e.g., the XY plane. The fourth lens body LE4 includes the lens OP1d and a lens OP4d which are disposed in front of the lenses OP1c and OP4c. The fourth lens body LE4 also includes non-refractive portions OP2d and OP3d disposed in front of the lenses OP2b and OP3b. The non-refractive portions OP2d and OP3d are portions which transmit light without refracting the light (portions without the function of a lens). The non-refractive portions OP2d and OP3d are provided so as to give a single lens appearance to the lens group illustrated in FIG. 31.

The lens OP1c and the lens OP1d (see FIG. 31) disposed in front of the lens OP1c are included in the magnification varying lens 14 which horizontally enlarges the light source image I1 of the light source LS1 (see FIG. 30A). Likewise, the lens OP4c and the lens OP4d (see FIG. 31) disposed in front of the lens OP4c are included in the magnification varying lens 14 which horizontally enlarges the light source image I4 of the light source LS4 (see FIG. 30A).

As described above, according to Sixth Embodiment, it is possible to provide the vehicular lamp fitting 10C which allows the horizontally wide ADB light distribution pattern P to be formed without involving an increase in the number of the light sources LS.

This is because the vehicular lamp fitting 10C includes the magnification varying lens 14 which sets the horizontal magnifications of the light source images I1 and I4 disposed in the peripheral portions higher than the horizontal magnifications of the light source images I2 and I3 disposed in the center portion.

According to Sixth Embodiment, the horizontal magnifications of the light source images I1 and I4 disposed in the peripheral portions are higher than the horizontal magnifications of the light source images I2 and I3 disposed in the center portion. As a result, it is possible to form the ADB light distribution pattern P having excellent long distance visibility in which the luminous intensity of the center portion (light source images I2 and 13) is higher than the luminous intensity of each of the peripheral portions (light source images I1 and 14).

According to Sixth Embodiment, the horizontal magnifications of the light source images I1 and I4 disposed in the peripheral portions are higher than the horizontal magnifications of the light source images I2 and I3 disposed in the center portion. As a result, it is possible to form the ADB light distribution pattern P in which the resolution of the center portion (light source images I2 and 13) is higher than the resolution of each of the peripheral portions (light source images I1 and 14).

Next, a description will be given of a modification.

In the embodiment described above, the description has been given of the example using the matrix light sources as the light sources LS1 to LS4, but the light sources LS1 to LS4 are not limited thereto. For example, it may also be possible to use the matrix light sources as the light sources LS2 and LS3 of the light source images disposed in the center portion and use light sources other than the matrix light sources, e.g., light sources each including at least one semiconductor light emitting element (e.g., LED chip) having an about 4 mm square light emitting surface as the light sources LS1 and LS4 of the light source images disposed in the peripheral portions.

According to the present modification, it is possible to form the ADB light distribution pattern P including the pixels PX (pixel group) arranged in a matrix configuration in the center portion and including at least one light source image disposed in a non-matrix configuration (e.g., in a horizontal row) in the peripheral portions.

### Seventh Embodiment

Next, a description will be given of a vehicular lamp fitting 10D according to Seventh Embodiment.

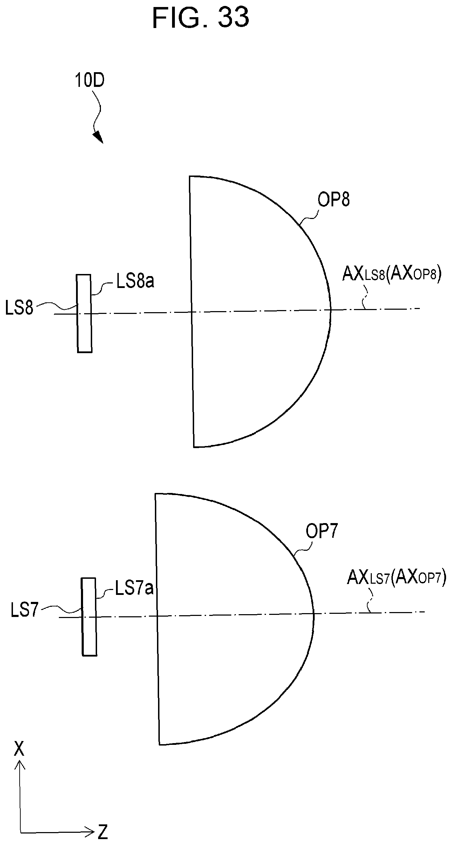

FIG. 33 is a horizontal sectional view of the vehicular lamp fitting 10D according to Seventh Embodiment.

First, a description will be given of the ADB light distribution pattern P in Seventh Embodiment. The ADB light distribution pattern P is an example of the predetermined light distribution pattern of the present invention.

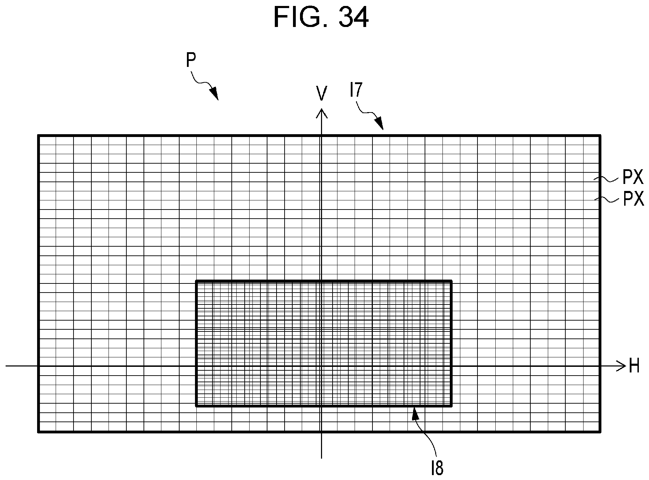

FIG. 34 illustrates an example of the ADB light distribution pattern P formed on a virtual vertical screen (e.g., disposed about 25 m ahead of the front surface of the vehicle) directly facing the front surface of the vehicle.

As illustrated in FIG. 34, the ADB light distribution pattern P includes two light source images I7 and 18. When the light source images I7 and I8 are not particularly distinguished from each other, the light source images I7 and I8 are referred to as the light source images I.

In the same manner as in First Embodiment, the light source images I include the plurality of pixels PX which are individually turned ON/OFF (or dimmed) in response to the turning ON/OFF control of the light sources LS (plurality of semiconductor light emitting elements). As will be described later, as a result of enlarged projection of the light source images I by the projection lenses, the light source image I7 (pixel group) and the light source image I8 (pixel group) are disposed in overlapping relation on the virtual vertical screen.

At that time, the light source image I8 is disposed in a horizontal center portion of the ADB light distribution pattern P. Meanwhile, a magnification of the light source image I7 is higher than that of the light source image I8, and at least a portion of the light source image I7 is disposed in a horizontally peripheral portion (both end portions) of the ADB light distribution pattern P.

Next, a description will be given of an example of a configuration of the vehicular lamp fitting 10D which forms the ADB light distribution pattern P including the light source images I7 and I8 described above.

As illustrated in FIG. 33, the vehicular lamp fitting 10D according to Seventh Embodiment includes light sources LS7 and LS8 and projection lenses OP7 and OP8 corresponding to the light sources LS7 and LS8.

Similarly to the light sources LS1 to LS4, the light sources LS7 and LS8 are matrix light sources each including a semiconductor light emitting element group (e.g., a total of 1024 LED chips (pixels) arranged in 32 columns and 32 rows) arranged in a matrix configuration in a rectangular region (e.g., about 4 mm square).

The optical axis AX_{LS7} of the light source LS7 coincides with the optical axis AX_{OP7} of the projection lens OP7. Also, the optical axis AX_{LS8} of the light source LS8 coincides with the optical axis AX_{OP8} of the projection lens OP8. The optical axis AX_{OP7} of the projection lens OP7 and the optical axis AX_{OP8} of the projection lens OP8 are parallel with each other.

Projection magnifications (e.g., a magnification in the X-axis direction and a magnification in the Y-axis direction) of the projection lens OP7 are higher than projection magnifications of the projection lens OP8. Accordingly, magnifications of the light source image I7 enlargedly projected by the projection lens OP7 are higher than those of the light source image I8 enlargedly projected by the projection lens OP8.

As a result, the horizontally wide ADB light distribution pattern P is formed in which the magnifications of the light source image I7 having at least a portion thereof disposed in the peripheral portion are higher than the magnifications of the light source image I8 disposed in the center portion.

As described above, according to Seventh Embodiment, it is possible to provide the vehicular lamp fitting 10D which allows the horizontally wide ADB light distribution pattern P to be formed without involving an increase in the number of the light sources LS.

This is because the magnifications of the light source image I7 disposed in the peripheral portion are higher than the magnifications of the light source image I8 disposed in the center portion.

According to Seventh Embodiment, the magnifications of the light source image I7 disposed in the peripheral portion are higher than the magnifications of the light source image I8 disposed in the center portion. As a result, it is possible to form the ADB light distribution pattern P having excellent long distance visibility in which the luminous intensity of the center portion (light source image 18) is higher than the luminous intensity of the peripheral portion.

According to Seventh Embodiment, the magnifications of the light source image I7 disposed in the peripheral portion are higher than the magnifications of the light source image I8 disposed in the center portion. As a result, it is possible to form the ADB light distribution pattern P in which the resolution of the center portion (light source image 18) is higher than the resolution of the peripheral portion (17).

Next, a description will be given of a modification.

In the embodiment described above, the description has been given of the example using the matrix light sources as the light sources LS7 and LS8, but the light sources LS7 and LS8 are not limited thereto. For example, it may also be possible to use the matrix light source as the light source LS8 of the light source image disposed in the center portion and use a light source other than the matrix light source, e.g., a light source including at least one semiconductor light emitting element (e.g., LED chip) having an about 4 mm square light emitting surface as the light source LS7 of the light source image disposed in the peripheral portion.

According to the present modification, it is possible to form the ADB light distribution pattern P including the pixels PX (pixel group) arranged in a matrix configuration in the center portion and including at least one light source image disposed in a non-matrix configuration (e.g., in a horizontal row) in the peripheral portion.

### Eighth Embodiment

Next, a description will be given of a vehicular lamp fitting 10E according to Eighth Embodiment.

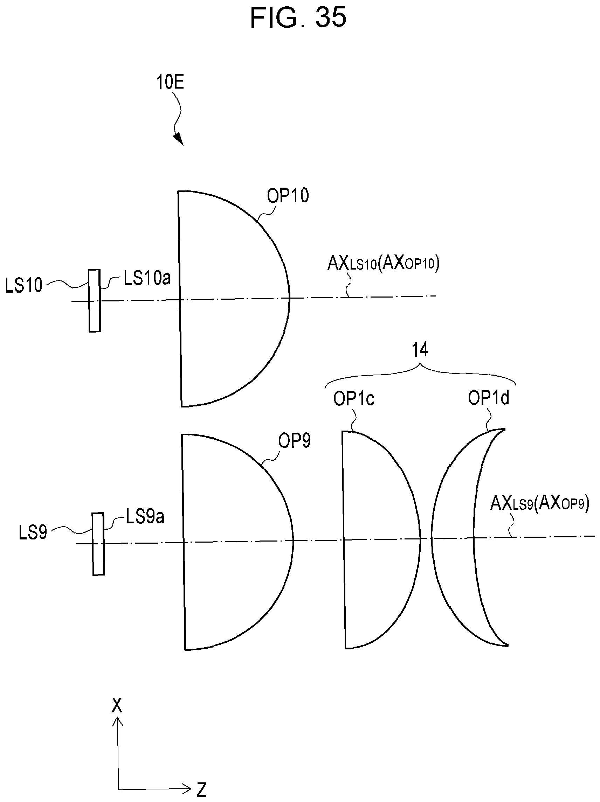

FIG. 35 is a horizontal sectional view of the vehicular lamp fitting 10E according to Eighth Embodiment.

First, a description will be given of the ADB light distribution pattern P in Eighth Embodiment. The ADB light distribution pattern P is an example of the predetermined light distribution pattern of the present invention.

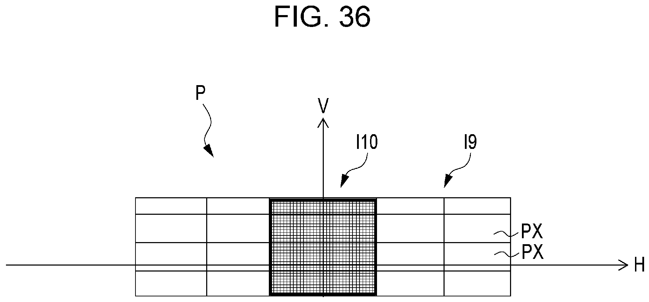

FIG. 36 illustrates an example of the ADB light distribution pattern P formed on a virtual vertical screen (e.g., disposed about 25 m ahead of the front surface of the vehicle) directly facing the front surface of the vehicle.

As illustrated in FIG. 36, the ADB light distribution pattern P includes two light source images I9 and 110. When the light source images I9 and 110 are not particularly distinguished from each other, the light source images I9 and 110 are referred to as the light source images I.

In the same manner as in First Embodiment, the light source images I include the plurality of pixels PX which are individually turned ON/OFF (or dimmed) in response to the turning ON/OFF control of the light sources LS (plurality of semiconductor light emitting elements). As will be described later, as a result of enlarged projection of the light source images I by the projection lenses, the light source image 110 (pixel group) and the light source image I9 (pixel group) are disposed in overlapping relation on the virtual vertical screen.

At that time, the light source image 110 is disposed in a horizontal center portion of the ADB light distribution pattern P. Meanwhile, magnifications of the light source image I9 are higher than those of the light source image 110, and at least a portion of the light source image I9 is disposed in horizontally peripheral portions (both end portions) of the ADB light distribution pattern P.

Next, a description will be given of an example of a configuration of the vehicular lamp fitting 10E which forms the ADB light distribution pattern P including the light source images I9 and 110 described above.

As illustrated in FIG. 35, the vehicular lamp fitting 10E according to Eighth Embodiment includes light sources LS9 and LS10, projection lenses OP9 and OP10 corresponding to the light sources LS9 and LS10, and the magnification varying lens 14 disposed in front of the projection lens OP9.

Similarly to the light sources LS1 to LS4, the light sources LS9 and LS10 are matrix light sources each including a semiconductor light emitting element group (e.g., a total of 1024 LED chips (pixels) arranged in 32 columns and 32 rows) arranged in a matrix configuration in a rectangular region (e.g., about 4 mm square).

The optical axis AX_{LS9} of the light source LS9 coincides with the optical axis AX_{OP9} of the projection lens OP9. Also, the optical axis AX_{LS10} of the light source LS10 coincides with the optical axis AX_{OP10} of the projection lens OP10. The optical axis AX_{OP9} of the projection lens OP9 and the optical axis AX_{OP10} of the projection lens OP10 are parallel with each other.

Projection magnifications of the projection lens OP9 and projection magnifications of the projection lens OP10 are equal to each other.

In a horizontal cross section, a focal length of an optical system including the projection lens OP9 and the magnification varying lens 14 is shorter than a focal length of the projection lens OP9 (the same applies also to the projection lens OP10). Accordingly, a horizontal magnification of the light source image I9 enlargedly projected by the optical system including the projection lens OP9 and the magnification varying lens 14 is higher than a horizontal magnification of the light source image 110 enlargedly projected by the projection lens OP10.

As a result, a horizontally wide ADB light distribution pattern P is formed in which the magnifications of the light source image I9 having at least portions thereof disposed in the peripheral portions are higher than the magnifications of the light source image 110 disposed in the center portion.

As described above, according to Eighth Embodiment, it is possible to provide the vehicular lamp fitting 10E which allows the horizontally wide ADB light distribution pattern P to be formed without involving an increase in the number of the light sources LS.

This is because the vehicular lamp fitting 10E includes the magnification varying lens 14 which sets the horizontal magnification of the light source image I9 disposed in the peripheral portions higher than the horizontal magnification of the light source image 110 disposed in the center portion.

According to Eighth Embodiment, the horizontal magnification of the light source image I9 disposed in the peripheral portions is higher than the horizontal magnification of the light source image 110 disposed in the center portion. As a result, it is possible to form the ADB light distribution pattern P having excellent long distance visibility in which a luminous intensity of the center portion (light source image 110) is higher than a luminous intensity of each of the peripheral portions (light source image 19).

According to Eighth Embodiment, the horizontal magnification of the light source image I9 disposed in the peripheral portions is higher than the horizontal magnification of the light source image 110 disposed in the center portion. As a result, it is possible to form the ADB light distribution pattern P in which the resolution of the center portion (light source image 110) is higher than the resolution of each of the peripheral portions (light source image 19).

Next, a description will be given of a modification.

In the embodiment described above, the description has been given of the example using the matrix light sources as the light sources LS9 and LS10, but the light sources LS9 and LS10 are not limited thereto. For example, it may also be possible to use the matrix light source as the light source LS10 of the light source image disposed in the center portion and use a light source other than the matrix light source, e.g., a light source including at least one semiconductor light emitting element (e.g., LED chip) having an about 4 mm square light emitting surface as the light source LS9 of the light source image disposed in the peripheral portions.

According to the present modification, it is possible to form the ADB light distribution pattern P including the pixels PX (pixel group) arranged in a matrix configuration in the center portion and including at least one light source image disposed in a non-matrix configuration (e.g., in a horizontal row) in the peripheral portions.

Each of numerical values shown in each of the embodiments and modifications described above is illustrative, and numerical values different therefrom can be used appropriately

Each of the embodiments described above is illustrative in every respect. The present invention should not be construed as limited to such description. The present invention can be implemented in various other modes without departing from the spirit or main features thereof.

## Claims

1. A vehicular lamp fitting that forms a predetermined light distribution pattern including a plurality of light source images, the vehicular lamp fitting comprising:
a plurality of light sources including respective semiconductor light emitting element groups each arranged in a matrix configuration;
a plurality of projection optical systems corresponding to the plurality of light sources; and
control means that performs individual turning ON/OFF control of each of the semiconductor light emitting element groups, wherein
the plurality of projection optical systems include a first projection optical system corresponding to a first light source and a second projection optical system corresponding to a second light source,
the plurality of light source images include a first light source image including a first pixel group corresponding to the semiconductor light emitting element group of the first light source and a second light source image including a second pixel group corresponding to the semiconductor light emitting element group of the second light source,
the predetermined light distribution pattern includes an overlap region where at least a part of the first pixel group and at least a part of the second pixel group overlap each other, and
the control means performs the individual turning ON/OFF control of each of the semiconductor light emitting element groups such that a brightness difference between the predetermined light distribution pattern inside the overlap region and the predetermined light distribution pattern outside the overlap region is inconspicuous.

2. The vehicular lamp fitting according to claim 1, wherein the control means performs the individual turning ON/OFF control of each of the semiconductor light emitting element groups so as to reduce at least one of a luminous intensity of the first pixel group inside the overlap region and a luminous intensity of the second pixel group inside the overlap region.

3. The vehicular lamp fitting according to claim 1, wherein the control means performs the individual turning ON/OFF control of each of the semiconductor light emitting element groups so as to gradationally reduce at least one of a luminous intensity of the first pixel group inside the overlap region and a luminous intensity of the second pixel group inside the overlap region.

4. The vehicular lamp fitting according to claim 1, wherein the control means performs individual turning ON/OFF control of control of each of the semiconductor light emitting element groups so as to turn ON the first pixel group inside the overlap region and turn OFF the second pixel group inside the overlap region.

5. The vehicular lamp fitting according to any one of claims 1 to 4, further comprising:
failure detection means that detects a failed semiconductor light emitting element included in any of the semiconductor light emitting element groups, wherein
the semiconductor light emitting element group of the first light source includes a first semiconductor light emitting element corresponding to a first pixel included in the first pixel group,
the semiconductor light emitting element group of the second light source includes a second semiconductor light emitting element corresponding to a second pixel included in the second pixel group and overlapping the first pixel, and,
when a failure of the first semiconductor light emitting element is detected by the failure detection means, the control means performs the turning ON/OFF control of the second semiconductor light emitting element so as to increase a luminous intensity of the second pixel.

6. The vehicular lamp fitting according to claim 5, further comprising:
reporting means that reports, when the failure of the first semiconductor light emitting element is detected by the failure detection means, the detected failure of the first semiconductor light emitting element.

7. The vehicular lamp fitting according to any one of claims 1 to 6, wherein the first light source image and the second light source image are horizontally arranged such that a part of the first pixel group and a part of the second pixel group overlap each other.

8. The vehicular lamp fitting according to any one of claims 1 to 6, wherein the first light source image and the second light source image are arranged such that the entire first pixel group and at least a part of the second pixel group overlap each other.
